# EUROPEAN PATENT APPLICATION

(11) **EP 1 225 096 A2**
(43) Date of publication of application: **24.07.2002**
(21) Application number: 01130531.5
(22) Date of filing: 21.12.2001
(51) Int. Cl.: B60R 11/02, H04B 1/08

(54) **Electronic device**

(30) Priority: 26.12.2000 JP 2000396155; 26.12.2000 JP 2000396156; 26.12.2000 JP 2000396157; 10.01.2001 JP 2001003070
(71) Applicant: AIWA CO., LTD., Taito-ku, Tokyo 110-0008 (JP)
(72) Inventor: Kamewada, Shinichi, Tochigi-ken 321-0952 (JP); Tanaka, Masafumi, Tokyo 110-0008 (JP); Kubotani, Shigeharu, Tokyo 110-0008 (JP); Miura, Takashi, Tokyo 110-0008 (JP); Mizoguchi, Kota, Tokyo 110-0008 (JP)
(74) Representative: Dreiss, Fuhlendorf, Steimle & Becker

(57) **Abstract**

An electronic device is provided with a first panel (12) selectively exposing the front face or the reverse face by being rotated, and a second panel (14) mounted so that it is shifted between the position being flush with the first panel (12) and the position where it is retracted into the system body (10). A braking unit for panels in which a resilient pressing member (288) mounted on the second panel (14) is brought into abutment with the first panel (12) when the second panel (14) is shifted from the position within the system body (10) to the position being flush with the first panel (12) that is exposing its front face is further provided. An electronic device further comprises an urging member (300) fixed on the axial rod (215) of the first panel (12) and an urging operation element (302,304) formed with a resiliently deformable oblique line on a part of the urging member (300).

## Description

### BACKGROUND OF THE INVENTION

### Field of the Invention

The present invention relates to an electronic device in which a panel is movably mounted.

More specifically, the present invention relates to an electronic device in which a panel is movably mounted on the front face of the system body.

Further specifically, the present invention relates to electric equipment in which a panel is mounted so as to be driven by the driving mechanism.

### Description of the Related Art

Generally, some electronic devices such as a car stereo or the like for automobile use is provided with a system for hiding the electronic device for protecting the same against theft when the user leaves the car.

In a vehicle mounted electronic device comprising such an antitheft system, a front panel on which a final controlling element and a display section is arranged is rotatably mounted independently of the equipment body. On this front panel, a controlling/displaying surface on which a final controlling element, display section, or the like are arranged is provided, and a camouflage surface designed to have uniformity with the peripheral portion of the equipment body of the instrument panel in the car interior is provided on the reverse side of the controlling/displaying surface.

When the user leaves his/her car, he or she rotates (reverses) the front panel of the vehicle mounted electronic device so that the camouflage surface of the front panel portion is exposed to the car interior. This may put the front face of the equipment body out of sight by covering it by the camouflage surface and camouflage as if there is no electronic device existed.

In the related art, a vehicle mounted electronic device in which a front panel portion can automatically be reversed as in Japanese Laid-Open Patent Application Publication No.09-267699 is proposed.

In a vehicle mounted electronic device disclosed in Japanese Laid-Open Patent Application Publication No.09-267699, a control panel is mounted on the front face of the equipment body in such a manner that a driving mechanism rotates the control panel on its axis while shifting the axis of rotation so that the driving mechanism drives and shifts the control panel between the first operating state in which the normally used controlling surface of the control panel is exposed and the second operating state in which the reverse concealing surface of the control panel is exposed.

In this driving mechanism, an axis of rotation is arranged at one end of the control panel along the width thereof, and the control panel is mounted in such a manner that the axis of rotation thereof shifts between the upper front position and the lower front position of the electronic device.

The driving mechanism rotates and reverses the control panel in front of the vehicle mounted electronic device by rotating the control panel by 180° while shifting the axis of rotation of the control panel between the upper front position and the lower front position of the electronic device.

In the vehicle mounted electronic device as described above, the driving mechanism rotates and reverses the control panel in front of the vehicle mounted electronic device. Therefore, since the driving mechanism is required to perform an action to shift the axis of rotation of the control panel between the upper front position and the lower front position of the electronic device and an action to rotate the control panel by 180° concurrently at just the right moment, the construction is forced to be complicated, and the cost increases accordingly.

Since an extremely precise action is required in such a complicatedly constructed driving mechanism, even a factor of malfunction such as a slight manufacturing error may hinder the precise action, and thus the reliability in performance of the driving mechanism may be impaired.

In the above-described vehicle mounted electronic device, a number of gears are used in the driving gear mechanism, which complexify the construction.

Therefore, the control panel controlled by the complex driving gear mechanism using a number of gears may be subjected to looseness due to so-called backlash in the gear train using a number of gears or the manufacturing error of the driving gear mechanism when it is set to the first operating state in which the operating surface of the control panel that is usually used is exposed and to the second operating state in which the concealing face on the reverse face of the control panel is exposed, whereby the control panel may be rattled disadvantageously in the direction of rotation by the amount corresponding to the backlash or looseness of the gears.

When the user presses the switches on the control panel in a state in which the control panel moves unstably due to backlash or looseness, the control panel unstably moves every time due to backlash or looseness of the gears, thereby hindering a feeling of operation.

In addition, with the control panel in the second operating state in which the concealing face on the reverse side is exposed, if the control panel unstably moves due to backlash or looseness when the user touches the concealing face on the reverse side of the control panel, or if the control panel is unstably vibrated due to backlash or looseness by externally applied vibration, the user feels irked, and thus the control panel that moves unstably cannot earn user's confidence.

In addition, even when the control panel is set to the second operating state where the concealing face on the reverse side is exposed, if the control panel rattles, the fact that the device body is installed behind the control panel with its concealing face exposed may easily be discovered.

### SUMMARY OF THE INVENTION

With such circumstances in view, it is an object of the present invention to provide novel electronic device having a panel portion driven by the driving mechanism, which is simple in construction, can be manufactured at low cost, and is reliable in performance.

It is another object of the present invention to provide novel electronic device being simple in construction and being able to be manufactured at low cost, in which the panel is supported fixedly so as to provide a good feeling of operation when the user operates the switches on the panel when the panel is set to the operating state in which the normally used controlling surface is exposed.

It is still another object of the present invention to provide novel electronic device being simple in construction and being able to be manufactured at low cost, in which the panel is supported fixedly and maintained its orientation when the panel is set to the prescribed operating state so that the panel can perform its function in the prescribed operating state.

Electronic equipment according to the first aspect of the present invention comprises a first panel mounted at the panel mounting position facing outwardly of the system body so as to rotate to selectively expose the front face or the reverse face, a second panel mounted at the panel mounting position facing outwardly of the system body so as to shift between the position in which it is flush the first panel and the position in which it is retracted into the system body, and a drive unit for carrying out an operation to retract the second panel that is flush with the first panel into the system body and an operation to rotate the first panel exposing the front face at the panel mounting position to the position where the reverse face is exposed at the panel mounting position.

In this arrangement, in the electronic device operates the second panel from a state in which the front face of the first panel and the front face of the second panel are flush with each other to a state in which a second panel is retracted into the system body from the position being flush with the first panel by the operation of the drive unit.

In this electronic device, the drive unit rotates the first panel and reverses its exposed face from the front face to the reverse face.

In this arrangement, a simple rotating operation of the drive unit may change the surfaces of the first and second panels exposed outwardly of the system body, thereby changing the appearance made up with these panels accordingly. Since the driving unit has a simple construction to make the first panel go into a simple rotating action and the second panel go into a simple shifting action, and thus it can easily be manufactured, the electronic device can be manufactured at low cost. In addition, since the action of the drive unit is simplified, reliability in performance may also be improved.

The electronic device according to the first aspect of the present invention preferably comprises a drive for shifting the second panel linearly between the position being flush with the first panel and the position being retracted into the system body and a drive for reversing the exposed face of the first panel from the front face to the reverse face.

In this arrangement, the electronic device shifts the second panel from the state of being flush with the first panel to the position being retracted into the system body by the operation of the drive unit for a linear motion.

The electronic device rotates the first panel and reverses its exposed face from the front face to the reverse face by the drive unit for a rotary motion.

In this way, with a simple action of each of the drive unit for a linear motion and the drive unit for a rotary motion, the faces of the first and second panels that are exposed outwardly of the system body may be changed, and accordingly the appearance made up with these panels may be changed. Since the drive units for a linear motion and for a rotary motion have simple construction to make the first panel go into a simple rotating action and the second panel go into a simple shifting action, and thus they can easily be manufactured, the electronic device can be manufactured at low cost. In addition, since the action of the drive unit for a linear motion and the drive unit for a rotary motion are simplified, reliability in performance may also be improved.

The electronic device according to the first aspect of the present invention preferably further comprises a third panel being flush with the first panel at the panel mounting position facing outwardly of the system body and being mounted so as to rotate and selectively expose the front face or the reverse face, and a concealing panel journaled on the reverse side of the third panel, and is operated in such a manner that when the drive unit rotates the first panel so that the reverse face thereof is exposed at the panel mounting position, it also rotates the third panel into a state in which the reverse face is exposed, and the concealing panel closes and conceals the opening generated between the third panel and the first panel in association with the rotation of the third panel.

In this arrangement, the electronic device shifts the second panel from the state of being flush with the first panel to the position being retracted into the system body by the operation of the drive unit.

The electronic device rotates the first panel and reverses its exposed face from the front face to the reverse face by the drive unit.

With the electronic device, it is also possible to rotate the third panel to expose its reverse face, and in association with this action, to bring the concealing panel into a state of covering the opening between the first panel and the third panel, or vice versa.

As a consequent, a simple rotating operation of the drive unit can change the appearance exposed outwardly of the system body made up with the first, second, third, and the concealing panels. Since the drive unit has a simple construction such that it makes the first panel go into a simple rotating action, the second panel go into a simple shifting action, and the third panel perform a simple rotating action, and operates the concealing panel automatically in association with the rotating action of the third panel, it is easily be manufactured, and thus the electronic device can also be manufactured at low cost. In addition, the action of the drive unit is simplified, and reliability in performance may be improved.

The electronic device according to the second aspect of the present invention comprises a first panel mounted at the panel mounting position of the system body so as to rotate about an axis, and rotated to selectively expose the front face or the reverse face, a second panel mounted so as to shift between the position of being flush with the first panel and a position of being retracted into the system body, a driving mechanism for performing the operation to move the second panel from the position of being flush with the first panel to the position of being retracted into the system body and the operation to rotate the first panel and reverse its exposed face from the front face to the reverse face, or vice versa, and a braking unit for the panel in which a resilient pressing member mounted on the second panel presses and abuts against the first panel to prevent the first panel from being easily moved when rotating the first panel and reversing its exposed face from the reverse face to the front face and moving the second panel from the retracted position in the system body to the position flush with the first panel.

In this arrangement, in this electronic device, when the first panel and the second panel are in use where they are flush with each other with the front faces faced toward the panel mounting position of the system body, the resilient pressing portion of the braking unit for panels abuts against the first panel to support it and prevent the first panel from being easily moved. Therefore, when the user presses the control switches on the panel, unstable movement such as rattling of the panel may be prevented to provide the user a good feeling of usage.

Since the braking unit for panels has a simple construction such that the resilient pressing member is mounted on the second panel, it can be manufactured at low cost. In addition, since the construction is simplified and the action is also simplified, reliability in performance can be improved.

In the electronic device according to the second aspect of the present invention, preferably, the braking unit for panels comprises a spring member that is a small leaf spring mounted on the second panel and an abutting face formed on the first panel to which the tip portion of the spring member is resiliently abutted.

In this arrangement, in addition to the operations and effects of the present invention as described above, the tip portion of the spring member that is a small leaf spring mounted on the second panel can be shifted automatically into the state of being resiliently abutted against the abutting face of the first panel when the second panel is moved from the retracted position in the system body to the position flush with the first panel. Therefore, a specific operating unit for operating the braking unit for panels is not necessary, and thus the construction can be simplified.

The electronic device according to the third aspect of the present invention comprises a first panel rotated to selectively expose the front face or the reverse face, a second panel mounted so as to be shifted between the position being flush with the first panel and the position being retracted into the inside of the system body, a first operating unit for rotating the first panel, a second operating unit for shifting the second panel, and a cam mechanism for rotating the first panel via the first operating unit and shifting the second panel via the second operating unit.

In this arrangement, the electronic device performs the operation to drive the second operating unit from a state in which the first panel and the second panel are flush with each other and shift the second panel.

The electronic device further performs the operation to drive the first operating unit to rotate the first panel and reverses its exposed face from the front face to the reverse face.

With this operation, the first panel makes a simple rotating action, and the second panel makes a simple shifting action, so that the construction of the electronic device is simplified, and thus the electronic device can be manufactured at low cost. In addition, simplifying the construction and simplifying the action can improve reliability of performance.

In the electronic device according to the third aspect of the present invention, preferably, a concealing panel is mounted in such a manner that that it is moved to cover the space generated between the first panel and the panel mounting position when the electronic device is in the concealed state in which the first panel is rotated and covers the front portion of the second panel.

In this arrangement, when the electronic device is transformed into the concealed state, the front face of the system body is entirely covered by the decorated surface of the first panel and the concealing panel without leaving an opening or the like, thereby ensuring the effect of camouflage.

The electronic device of the present invention preferably comprises an urging member to be fixed on the axial rod provided on the first panel for rotatably supporting the first panel at the panel mounting position of the system body, an urging operation portion that is a spring member bent for forming a resiliently deformable inclined surface on a part of the urging member, and an actuating portion for preventing the panel combined with the urging member from being easily rotated about the axial rod by bringing the urging operation portion into abutment when the panel is transformed into a prescribed state.

In this arrangement, in this electronic device, when the first panel is in a prescribed state at the panel mounting position of the system body, it is supported so as not to be easily moved by bringing the urging operation portion of the urging member into abutment against the operating end of the actuating portion. Therefore, the first panel is prevented from moving unstably, for example, rattling, at the prescribed state where it is set at a prescribed position, and thus the function that can be obtained when the first panel is set to a prescribed operating state is preferably fulfilled, and the user has a good feeling of usage.

Since the urging member for the first panel may be constructed of a simple shaped spring member, it can be manufactured at low price.

In the electronic device according to the present invention, more preferably, the urging member has a pair of urging operation portion facing toward each other, which are formed into generally V-shaped cantilever leaf spring respectively, and when the first panel is transformed into a prescribed state, one of urging operation elements is brought into press-contact with one of the operating ends of the actuating portion that is an opening formed on the member fixed on the system body and urges the first panel combined with the urging member to rotate about the axial rod in the prescribed direction so that the panel resists moving, or a pair of urging operation potions are brought into press contact with each operating end of the actuating portion that is an opening formed on the member fixed on the system body simultaneously so that the axial rod is restrained from easily rotating.

In the arrangement described above, in addition to the operations and effects of the present invention described above, when a first panel is transformed into a prescribed state, one of the urging operation portions is brought into press-contact with one of the operation ends of the actuating portion and urges first panel combined with the urging member to rotate about the axial rod in the prescribed direction so that the first panel resists moving. In addition, when the first panel is transformed into another prescribed state, a pair of urging operation portion is brought into press-contact with each operating end of the actuating portion simultaneously, so that the axial rod is restrained from easily rotating and thus the first panel resists moving.

Therefore, with a combination of an urging member and an actuating portion, when the first panel is transformed into two prescribed states, the first panel resists moving each time. In other words, since the combination of an urging member and an actuating portion can achieve two restraining effects, the structure can be simplified.

### BRIEF DESCRIPTION OF THE DRAWINGS

Fig. 1 is a general perspective view of an electronic device according to the first embodiment of the present invention;
Fig. 2 is an enlarged fragmentary sectional side view of a panel-related portion of an electronic device according to the first embodiment of the present invention showing a state in which a panel mounted on the main body of the electronic device is in service condition;
Fig. 3 is an enlarged fragmentary sectional side view of the panel-related portion of the electronic device according to the first embodiment of the present invention showing a state in which a panel mounted on the main body of the electronic device is in transition from service condition to normal operating condition;
Fig. 4 is an enlarged fragmentary sectional side view of the panel-related portion of the electronic device according to the first embodiment of the present invention showing a state in which a panel mounted on the main body of the electronic device is in transition from service condition to normal operating condition;
Fig. 5 is an enlarged fragmentary sectional side view of the panel-related portion of the electronic device according to the first embodiment of the present invention showing a state in which a panel mounted on the main body of the electronic device is in transition from service condition to normal operating condition;
Fig. 6 is an enlarged fragmentary sectional side view of the panel-related portion of the electronic device according to the first embodiment of the present invention showing a state in which a panel mounted on the main body of the electronic device is in normal operating condition;
Fig. 7 is an enlarged fragmentary sectional side view of the panel-related portion of the electronic device according to the first embodiment of the present invention showing a state in which a panel mounted on the main body of the electronic device is in transition from normal operating condition to concealed condition;
Fig. 8 is an enlarged fragmentary sectional side view of the panel-related portion of the electronic device according to the first embodiment of the present invention showing a state in which a panel mounted on the main body of the electronic device is in concealed condition;
Fig. 9 is a general side view of a part relating to the panel mounted on the main body of the electronic device according to the second embodiment of the present invention showing the panel is in service condition;
Fig. 10 is a general side view of a part relating to the panel mounted on the main body of the electronic device according to the second embodiment of the present invention showing the panel is in normal operating condition;
Fig. 11 is a general side view of a part relating to the panel mounted on the main body of the electronic device according to the second embodiment of the present invention showing the panel is in concealed condition;
Fig. 12 is a general cross sectional side view of a part relating to the panel mounted on the main body of the electronic device according to the second embodiment of the present invention showing a state in which the panel is in transition from concealed condition to service condition the panel-related portion of the electronic device;
Fig. 13 is a general cross sectional side view of a part relating to the panel mounted on the main body of the electronic device according to the second embodiment of the present invention showing a state in which the panel is in transition from concealed condition to service condition;
Fig. 14 is a general side view of a part relating to the panel mounted on the main body of the electronic device according to a third embodiment of the present invention showing a state in which the panel is in service condition;
Fig. 15 is a general side view of a part relating to the panel mounted on the main body of the electronic device according to the third embodiment of the present invention showing the panel is in normal operating condition;
Fig. 16 is a general side view of a part relating to the panel mounted on the main body of the electronic device according to the third embodiment of the present invention showing the panel is in concealed condition;
Fig. 17 is a fragmentary sectional perspective view of a part relating to the panel mounted on the main body of the electronic device according to a fourth embodiment of the present invention showing a state in which a panel is in service condition;
Fig. 18 is a fragmentary sectional perspective view of a part relating to the panel mounted on the main body of the electronic device according to the fourth embodiment of the present invention showing a state in which a panel is in normal operating condition;
Fig. 19 is a fragmentary sectional perspective view of a part relating to the panel mounted on the main body of the electronic device according to the fourth embodiment of the present invention showing a state in which a panel is in concealed condition;
Fig. 20 is a fragmentary sectional general plan view of a part relating to the panel mounted on the main body of the electronic device according to the fourth embodiment of the present invention showing a state in which the panel is in normal operating condition;
Fig. 21 is a front view showing a panel portion of the main body of the electronic device according to the fourth embodiment of the present invention;
Fig. 22 is an enlarged fragmentary sectional side view of a part relating to the panel mounted on the main body of the electronic device with the operating follower removed according to the fourth embodiment of the present invention showing a state in which a panel is in service condition;
Fig. 23 is an enlarged fragmentary sectional side view of a part relating to the panel mounted on the main body of the electronic device according to the fourth embodiment of the present invention showing a state in which the panel is in service condition;
Fig. 24 is an enlarged fragmentary sectional side view of a part relating to the panel mounted on the main body of the electronic device according to the fourth embodiment of the present invention showing a state in which the panel is in transition from service condition to normal operating condition;
Fig. 25 is an enlarged fragmentary sectional side view of a part relating to the panel mounted on the main body of the electronic device according to the fourth embodiment of the present invention showing a state in which the panel is in transition from service condition to normal operating condition;
Fig. 26 is an enlarged fragmentary sectional side view of a part relating to the panel mounted on the main body of the electronic device according to the fourth embodiment of the present invention showing a state in which the panel is in transition from service condition to normal operating condition;
Fig. 27 is an enlarged side view of a portion of the operating mechanism of the display panel to be mounted on the main body of the electronic device of the electronic device according to the fourth embodiment of the present invention;
Fig. 28 is an enlarged side view of a portion of the operating mechanism of the control panel to be mounted on the main body of the electronic device of the electronic device according to the fourth embodiment of the present invention;
Fig. 29 is an enlarged fragmentary sectional side view of a part relating to the panel mounted on the main body of the electronic device according to the fourth embodiment of the present invention showing a state in which a panel is in normal service condition;
Fig. 30 is an enlarged fragmentary sectional side view of a part relating to the panel mounted on the main body of the electronic device according to the fourth embodiment of the present invention showing a state in which a panel is in transition from normal operating condition to concealed condition;
Fig. 31 is an enlarged fragmentary sectional side view of a part relating to the panel mounted on the main body of the electronic device according to the fourth embodiment of the present invention showing a state in which a panel is in concealed condition;
Fig. 32 is an enlarged exploded perspective view of a braking unit for display panels to be mounted on an body of the electronic device of an electronic device according to a fifth embodiment of the present invention;
Fig. 33 is a general enlarged fragmentary sectional side view of a portion related to the braking unit for display panel mounted on the main body of the electronic device of the electronic device according to the fifth embodiment of the present invention showing a state in which a panel is in service condition;
Fig. 34 is a general enlarged fragmentary sectional side view of a portion related to the braking unit for display panel mounted on the main body of the electronic device of the electronic device according to the fifth embodiment of the present invention showing a state in which a panel is in normal operating condition;
Fig. 35 is a general enlarged fragmentary sectional side view of a portion related to the braking unit for display panel mounted on the main body of the electronic device of the electronic device according to the fifth embodiment of the present invention showing a state in which a panel is in concealed condition;
Fig. 36 is a general enlarged fragmentary sectional front view of a portion related to the braking unit for display panel mounted on the main body of the electronic device according to the fifth embodiment of the present invention showing a state in which a panel is in concealed condition; and
Fig. 37 is a general enlarged sectional view of a portion related to the braking unit for display panel mounted on the main body of the electronic device according to the fifth embodiment of the present invention showing a state in which a panel is in concealed condition.

### DESCRIPTION OF THE PREFERRED EMBODIMENTS

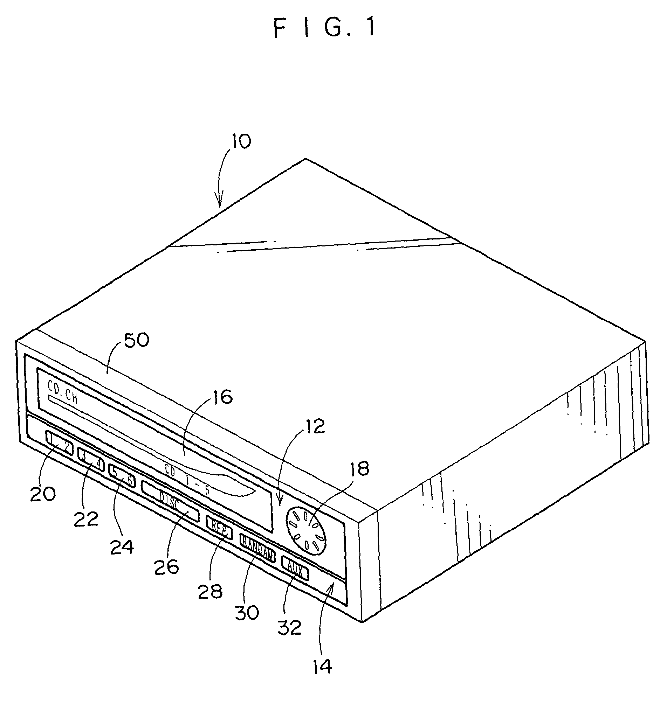

Referring now to the drawings, a first embodiment of the electronic device according to the present invention will be described. Fig. 1 to Fig. 8 show a principal portion related to a panel portion of a vehicle mounted electronic device driven by a driving mechanism according to the first embodiment.

The vehicle mounted electronic device shown in the figure is constructed as a car stereo to be installed on the instrument panel or the like in the car interior, and as shown in Fig. 1, a set of panel members are mounted on the front face portion to be exposed outwardly of the system body 10, which serves as a part of metallic chassis of the car stereo, so as to be driven by a driving mechanism.

A set of the panel members to be mounted at the panel mounting position located at the front face portion of the system body 10 is constructed of a display panel 12 as a first panel, and a control panel 14 as a second panel.

As shown in Fig. 1 to Fig. 8, the display panel 12 is formed into a thick plate shaped block, and its wide surface is provided with display portions 16, 18 including a liquid crystal display panel, and when needed, with a various types of control buttons (not shown).

In addition, the reverse face of the display panel 12 is made up of a camouflaging decorative surface designed to have uniformity with the peripheral portion where the system body 10 is to be installed (not shown).

The control panel 14 is formed into a prism shaped block, and the surface corresponding to it front face is provided with various control switches 20, 22, 24, 26, 28, 30, and 32, and when needed, with a liquid crystal display panel or other display components (not shown).

The display panel 12 thus constructed is mounted in such a manner that it can be rotated by 180° to reverse its exposed face from the front face to the reverse face, or from the reverse face to the front face by a drive unit for a rotary motion 34.

The drive unit for a rotary motion 34 is constructed to serve as a power transmission unit for transmitting a rotating power of the driving source such as a motor and concurrently as a unit for rotating the display panel 12 (not shown).

The control panel 14 is mounted in such a manner that it makes a linear reciprocating motion between the position facing toward the front face of the system body 10 and the stored position where it is retracted into the system body 10 by the drive unit 36 for a linear motion.

The drive unit for a linear motion 36 is constructed as a device for shifting the control panel 14 by a prescribed distance by a driving force of the drive source such as a linear motor, an actuator, or the like (not shown).

In addition to the construction in which the display panel 12 and the control panel 14 are driven separately by a drive unit for a rotary motion 34 and a drive unit for a linear motion 36 as described above, the construction in which a single drive unit drives and controls the display panel 12 and the control panel 14 may be employed (not shown).

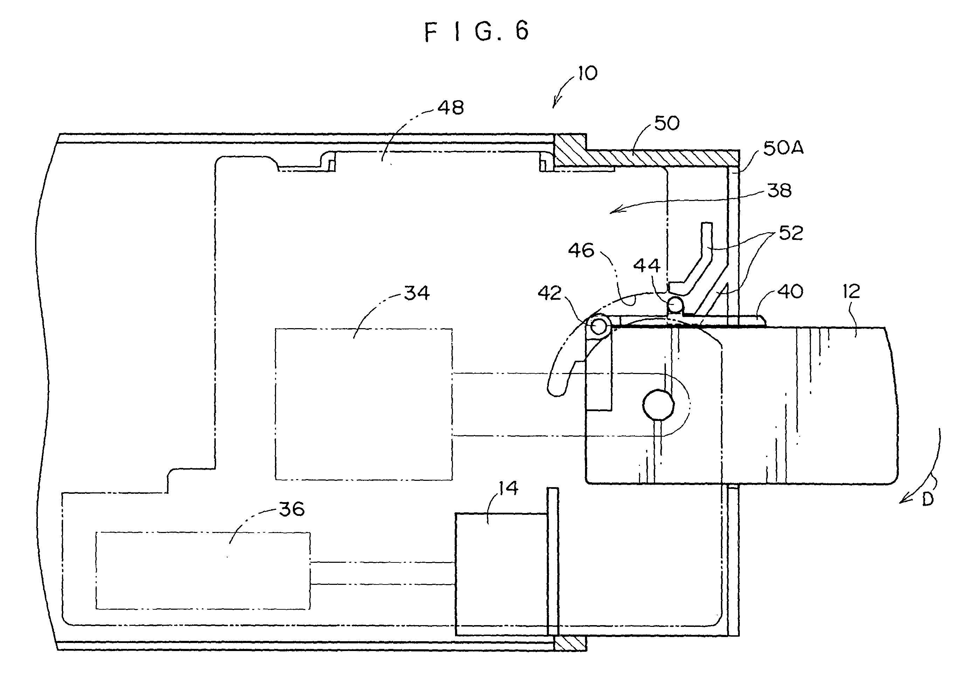

As shown in Fig. 6, in the system body 10, a player for recording and playing a recording disc (not shown) as a recording medium such as a Compact Disc or a Mini Disc is installed at the position inside the insertion port 38 of the system body 10 opening at the portion of the panel mounting position corresponding to the upper side of the figure to the upper edge of the display panel 12 when the display panel 12 is rotated by 90° sideways.

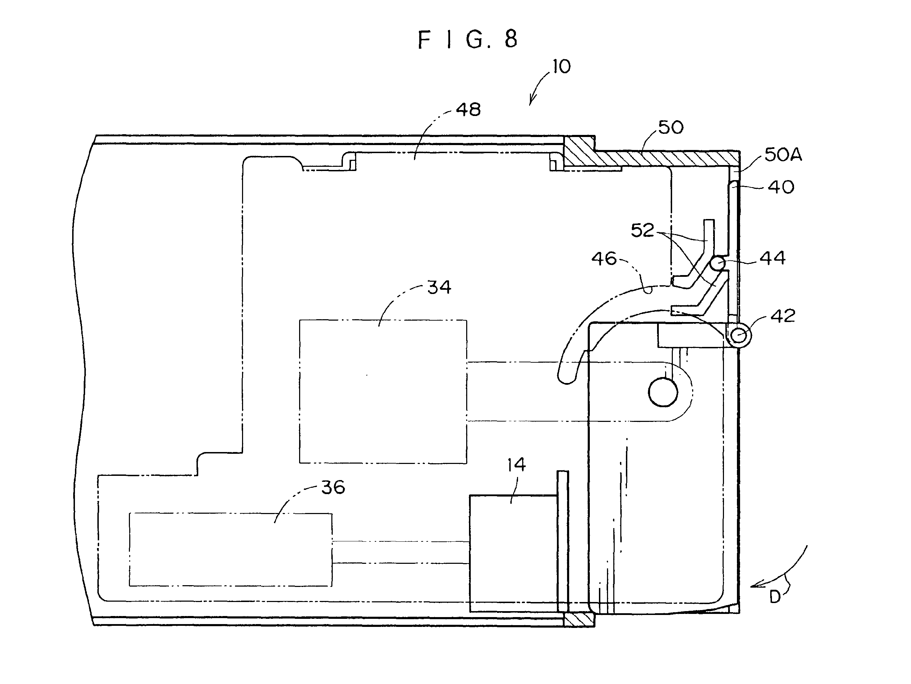

As shown in Fig. 8, in a state where the display panel 12 is reversed, a concealing panel 40 is mounted to close the insertion port 38.

The concealing panel 40 is formed into an elongated plate slightly smaller than the insertion port 38. The concealing panel 40 is provided with axial rods 42 projecting from both ends of the length at one side of the width, and with a driven member 44 having a round rod shape projecting from both ends at the center of the width.

The side surface of the concealing panel 40 that faces outward in Fig. 8 is formed with a camouflaging decorative surface designed to have uniformity with the peripheral portion around the position where the system body 10 is installed as in the case of the reverse face of the display panel 12.

The concealing panel 40 in this arrangement is supported with the axial rods 42 on both ends received into a bearing portion formed at the corners of the end surface of the display panel 12 near the reverse face in such a manner that the concealing panel 40 can rotate between the retracted position where the plane of the concealing panel 40 abuts against the end surface of the display panel 12 and the closed position where the concealing panel 40 stands upward at a right angle to the end surface of the display panel 12.

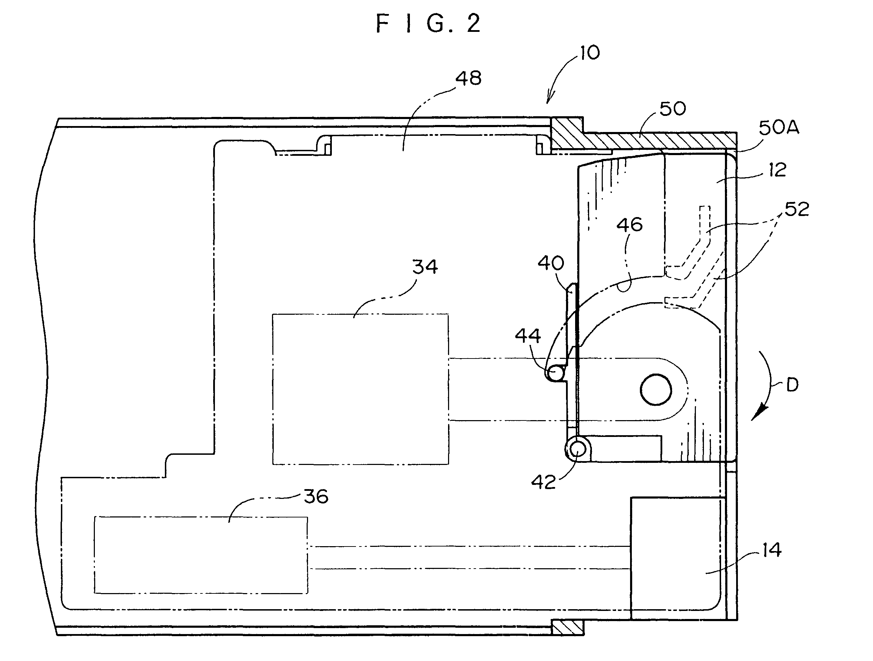

In order to shift the concealing panel 40 journaled on the display panel 12 between the retracted position and the closed position in conjunction with the action of the display panel 12, an arcuate shaped guiding groove for a rotary motion 46 through which the driven member 44 is slidably inserted and guided is formed at the prescribed position of the supporting member 48 fixed in the vicinity of both sides of the system body 10 (Fig. 2 to Fig. 8).

On the inner surface of the decorative frame member 50 fixed around the front face of the system body 10, there are provided guiding portions 52 so as to continue from the exit of the guiding groove for a rotary motion 46 formed on the supporting member 48, thorough which the driven member 44 is slidably inserted and guided.

In other words, the guiding portions 52 are formed as two small walls being bent and standing upward arranged side by side so as to continue from the inner surface of the decorative frame member 50. These guiding portions 52 are constructed as grooves for guiding the driven member 44 from the exit of the guiding groove for a rotary motion 46 toward the reverse face of the vertical plate portion 50A of the decorative frame member 50 located at front on both sides.

In the vehicle mounted electronic device constructed as described above according to an embodiment of the present invention, a detecting unit provided inside of the system body 10 detects that it is in the initial position of service condition shown in Fig. 1 and Fig. 2, and from this moment, the control unit (not shown) controls the drive unit for a rotary motion 34 and the drive unit for a linear motion 36 while counting by a counter for allowing the vehicle mounted electronic device to perform a prescribed action.

The operation and action of the vehicle mounted electronic device according to this first embodiment constructed as described above will now be described.

In this vehicle mounted electronic device in service condition shown in Fig. 1 and Fig. 2, the display panel 12 exposes the display surface including a liquid crystal display panel or the like, and the control panel 14 exposes various control buttons on the front face of the system body 10.

When this vehicle mounted electronic device is in service condition, the user can make the vehicle mounted electronic device perform desired recording/playing action for the recording disc (CD, MD, etc.) by operating the control button on the control panel 14 while viewing on the display panel 12.

In order to load or unload the recording disc such as CD or MD into/from the player installed in the system body 10 of this vehicle mounted electronic device, the display panel 12 and the control panel 14 are transformed into normal operating condition.

In order to do this, the user operates a prescribed switch on the control panel 14 for transforming the vehicle mounted electronic device into normal operating condition. Then the control unit of the vehicle mounted electronic device actuates the drive unit for a linear motion 36, and stops the drive unit for a linear motion 36 when the counter counts a prescribed time periods.

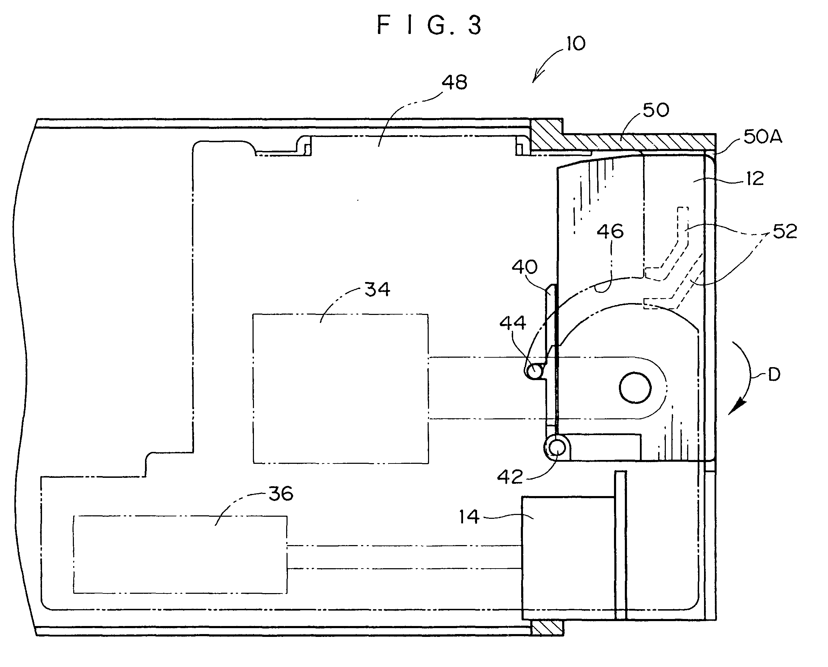

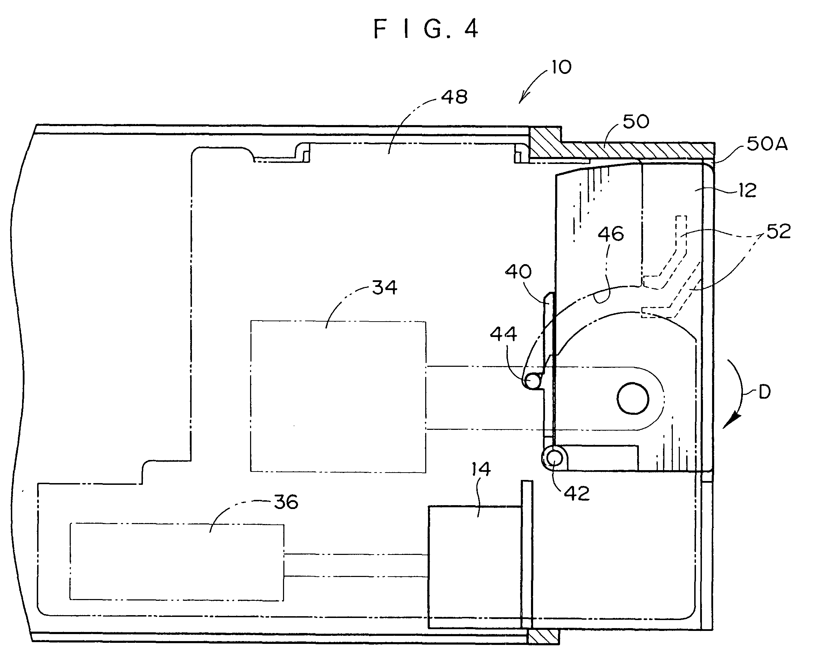

Then the control panel 14 is moved via the position shown in Fig. 2 and the position shown in Fig. 3 into the retracted position shown in Fig. 4 where it is stored into the system body 10 by the drive unit for a linear motion 36.

During the action to reach the state shown in Fig. 4, the display panel 12 is immobilized because the drive unit for a rotary motion 34 is in halt condition.

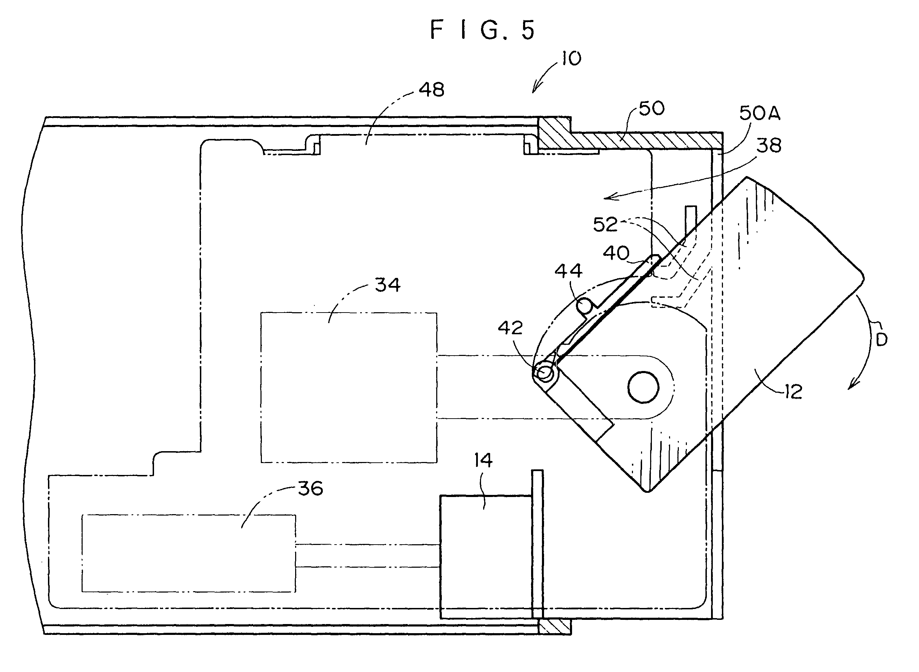

The control unit then rotates the display panel 12 from the state shown in Fig. 4 via the state shown in Fig. 5 to normal operating condition shown in Fig. 6 in the direction of the arrow D by driving the drive unit for a rotary motion 34 with the driving unit for a linear motion 36 kept in halt condition.

During the motion from service condition shown in Fig. 1 and Fig. 2 to normal operating condition shown in Fig. 6, the driven member 44 slides in the guiding groove for a rotary motion 46, and accordingly the concealing panel 40 journaled on the display panel 12 reaches the exit, but the driven member 44 is not transferred to the guiding portion 52 yet. Therefore, the concealing panel 40 is in a state of being abutted against the end surface of the display panel 12 and opening its insertion port 38.

Therefore, the operation to load or unload the recording disc such as the CD or the MD or the like into the player (not shown) mounted in the system body 10 is made through the opening insertion port 38.

When the user of this vehicle mounted electronic device gets off and leaves the vehicle (motor vehicle) provided with this system body 10, he or she transforms the vehicle mounted electronic device into concealed condition in which the existence of this vehicle mounted electronic device is concealed.

The action of transforming into concealed condition is started based on a signal generated for example when the ignition key of the motor vehicle is switched to OFF position.

Therefore, the control unit of the vehicle mounted electronic device actuates the drive unit for a rotary motion 34 when it received a signal representing that ignition key is switched to OFF position when the vehicle mounted electronic device is in normal operating condition shown in Fig. 6, and at the moment when the counter counted a prescribed time period, it stops the drive unit for a rotary motion 34.

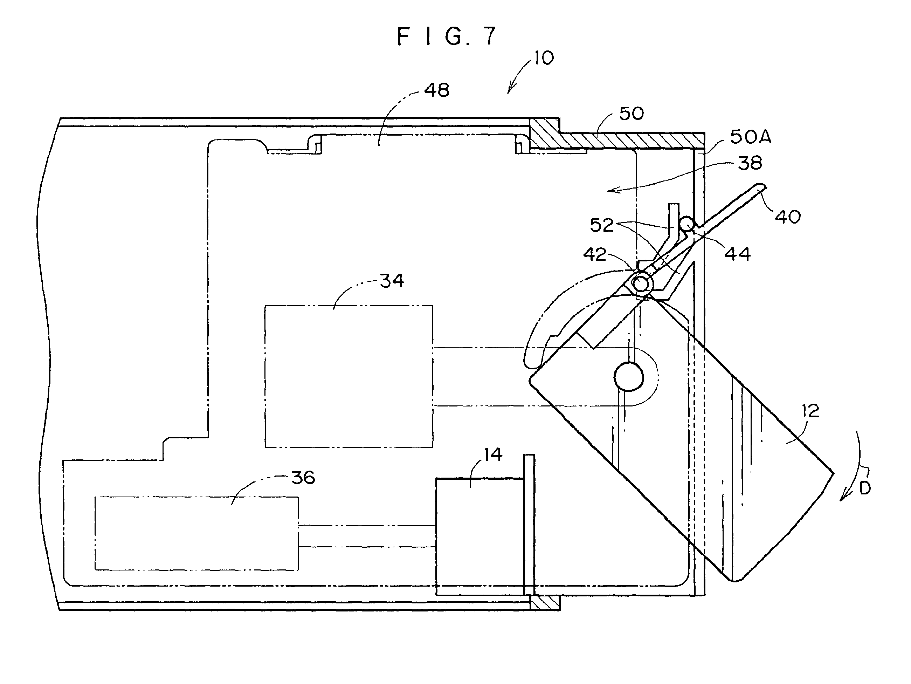

Then, the display panel 12 is rotated from normal operating condition shown in Fig. 6 through the condition shown in Fig. 7 to concealed condition shown in Fig. 8 in the direction of the arrow D by the drive unit for a rotary motion 34.

During the action from normal operating condition (Fig. 6) to concealed condition (Fig. 8), the driven member 44 of the concealing panel 40 comes out from the exit of the guiding groove 46 for a rotary motion, enters into the guiding portion 52 and is guided by the guiding portion 52 and accordingly the concealing panel 40 journaled on the display panel 12 rotates about the axial rods 42 to the condition where it is brought into upright position from the end surface of the display panel 12 to close the insertion port 38(Fig. 8).

During the motion to the concealed condition shown in Fig. 8, the control panel 14 stays in a retracted state.

Therefore, on the front face of the system body 10, the reverse face of the display panel 12, or the camouflaging decorative surface thereof designed to have uniformity with the peripheral portion where the system body 10 is to be installed is exposed, and the camouflaging decorative surface of the concealing panel 40 designed to have uniformity with the peripheral portion where the system body 10 is to be installed is also exposed as in the case of the reverse face of the display panel 12.

As a consequent, since the system body 10 of the vehicle mounted electronic device can camouflage as if no electronic device exists in the space for installing the same by means of camouflaging decorative surfaces of the display panel 12 and the concealing panel 40 in concealed condition, the vehicle mounted electronic device is effectively protected against theft.

The action to return from concealed condition to normal operating condition, and then to service condition is made by reversing procedure described above. The electronic device may be constructed in such a manner that the action to return from concealed condition to normal operating condition is started, for example, by a signal generated when the ignition key of the motor vehicle is switched from the OFF position to the ON position.

It is also possible to construct the electronic device in such a manner that it returns from service condition directly to concealed condition, or from concealed condition directly to service condition.

The construction of the electronic device according to the first embodiment described above may be applied not only to car stereos that is the vehicle mounted electronic device, but also to other various types of electronic devices for example for car navigation system provided with a exterior panel such as a front panel or the like. The panel is not indispensable to have a camouflaging surface on one side, and it may be constructed in such a manner that both faces are formed with control surfaces or with display surfaces, or that one of the faces is formed with a display surface and the other face is formed with a control surface, as a matter of course.

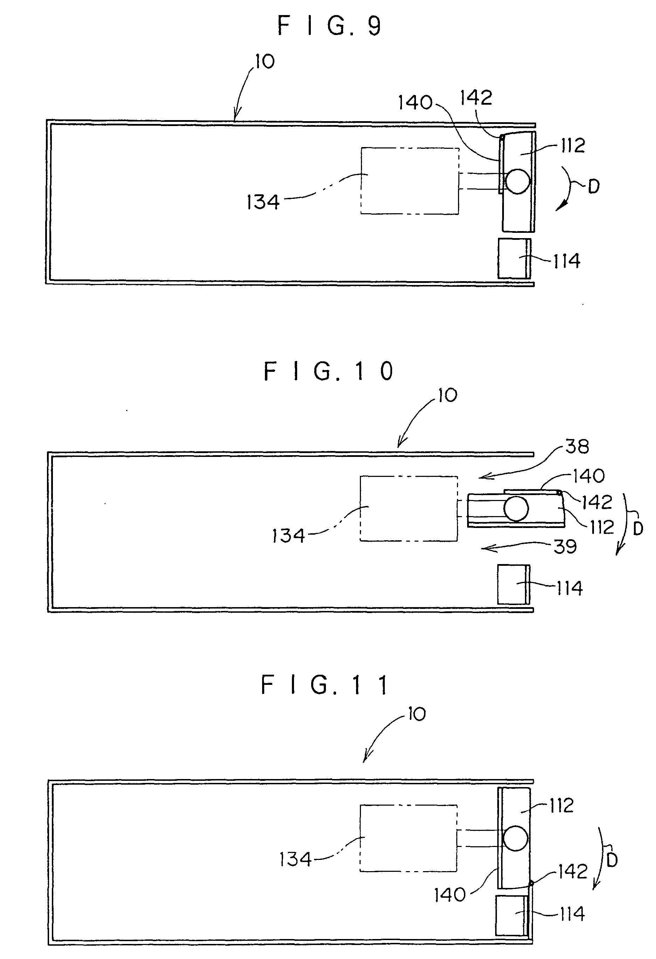

Referring now to Fig. 9 to Fig. 13, a second embodiment of the present invention will be described.

In the second embodiment, the front panel portion of the system body 10 of a car stereo is divided into a display panel 112 as a first panel and a control panel 114 as a second panel, and one of these panels, that is the display panel 112 is mounted in such a manner that it is rotated by means of a drive unit for a rotary motion 134. The control panel 114 as a second panel is fixedly arranged on the front surface of the system body 10.

As shown in Fig. 9 to Fig. 13, the display panel 112 is formed into a thick plate shaped block, and the wide surface is provided with a display portion such as a liquid crystal panel or the like, and when needed, with a various types of control buttons (not shown).

The reverse face of the display panel 112 is made up of a camouflaging decorative surface designed to have uniformity with the peripheral portion where the system body 10 is to be installed (not shown).

The control panel 114 is formed into a prism shaped block, and fixedly arranged on the bottom surface of the front face portion of the system body 10. In addition, a control panel 114 is provided with a various types of control switch on the surface corresponding to it front face, and as needed, with a display component (not shown) such as a liquid crystal display panel or the like.

The display panel 112 thus constructed is mounted in such a manner that it can be rotated by 180° to reverse its exposed face from the front face to the reverse face, and then rotated by 180° to reverse from the reverse face to the front face by a drive unit for a rotary motion 134.

The drive unit for a rotary motion 134 is constructed to serve as a power transmission unit for transmitting a rotating power of the driving source such as a motor and concurrently as a unit for rotating the display panel 112 (not shown).

As shown in Fig. 10, in the system body 10, a player for recording and playing a recording disc (not shown) as a recording medium such as a Compact Disc or a Mini Disc is installed at the position inside the insertion port 38 of the system body 10 opening at the portion of the panel mounting position corresponding to the upper side to the upper edge of the display panel 112 when the display panel 112 is rotated by 90° sideways.

It is also possible to dispose a player for recording and playing a recording disc (not shown) as a recording medium such as a Compact Disc or a Mini Disc at the position inside the insertion port 39 of the system body 10 opening at the position between the display panel 112 and the control panel 114, or to dispose required players in the insertion port 38 and the insertion port 39 respectively.

As shown in the figure, in the state where the display panel 112 is reversed, a concealing panel 140 is mounted to conceal the surface of the control panel 114.

The concealing panel 140 is formed into an elongated plate slightly smaller than the rectangular surface of the control panel 114. The concealing panel 140 is provided with axial rods 142 projecting from both ends of the length at one side of the width.

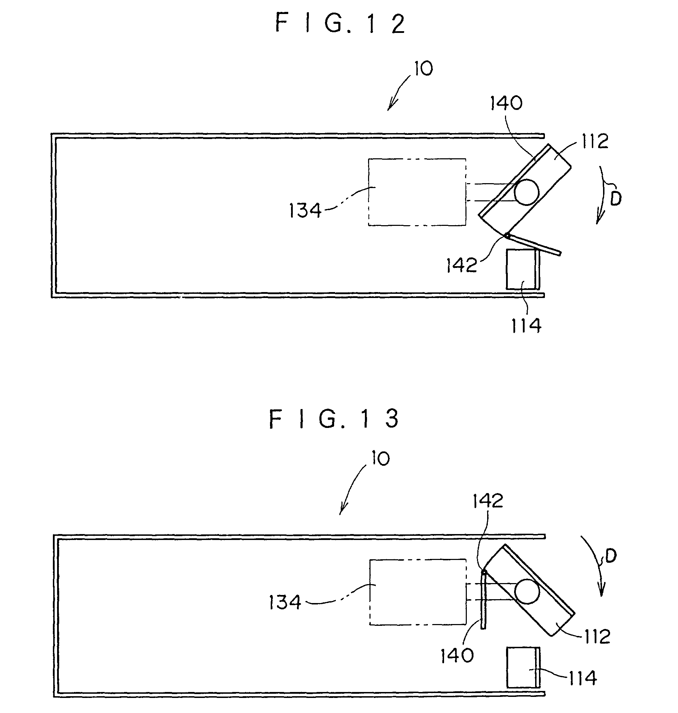

On the side surface of the concealing panel 140 facing toward the outside (Fig. 11), there is formed with a camouflaging decorative surface designed to have uniformity with the peripheral portion around the position where the system body 10 is installed as in the case of the reverse face of the display panel 112.

The concealing panel 140 in this arrangement is supported with the axial rods 142 on both ends received into a bearing portion formed at the corners of the end surface of the display panel 112 near the reverse face in such a manner that the concealing panel 140 can rotate between the retracted position where the plane of the concealing panel 140 abuts against the end surface of the display panel 112 and the closed position where the concealing panel 140 are flush with the end surface of the display panel 112.

In the vehicle mounted electronic device constructed as described above according to the second embodiment, a detecting unit provided inside the system body 10 detects that it is in the initial position of service condition shown in Fig. 1 and Fig. 2, and from this moment, the control unit (not shown) controls the drive unit for a rotary motion 134 and the drive unit for a linear motion 136 while counting by a counter for allowing the vehicle mounted electronic device to perform a prescribed action.

The operation and action of the vehicle mounted electronic device according to the second embodiment constructed as described above will now be described.

In the vehicle mounted electronic device in service condition shown in Fig. 9, the display panel 112 exposes the display surface including a liquid crystal display panel and the like, and the control panel 114 exposes various control buttons on the front face of the system body 10.

When this vehicle mounted electronic device is in service condition, the user can make the vehicle mounted electronic device perform desired recording/playing action for the recording disc (CD, MD, etc.) by operating the control button on the control panel 114 while viewing on the display panel 112.

Subsequently, in order to load or unload the recording disc such as CD or MD into/from the player installed in the system body 10 of this vehicle mounted electronic device, the display panel 112 is transformed into normal operating condition.

In order to do this, the user operates a prescribed switch on the control panel 114 for transforming the vehicle mounted electronic device into normal operating condition. Then the control unit of the vehicle mounted electronic device actuates the drive unit for a rotary motion 134, and stops the drive unit for a rotary motion 134 when the counter counts a prescribed time periods, so that the display panel 112 is rotated from the condition shown in Fig. 9 to the normally operating condition shown in Fig. 10 in the direction shown by the arrow D.

During the action to reach from service condition shown in Fig. 9 to normal controlling state shown in Fig. 10, the concealing panel 140 journaled on the display panel 112 is in the state of being abutted against the end surface of the display panel 112 by its own weight and opening the insertion port 38.

Therefore, the CD, MD or other recording discs are loaded or unloaded to/from the player (not shown) mounted in the system body 10 through this opened insertion port 38.

In normal operating condition shown in Fig. 10, the insertion port 39 is also in an opened state. Therefore, in the construction where a player (not shown) is disposed in the system body 10 corresponding to the inside of the opened insertion port 39, the CD, MD or other recording discs are loaded or unloaded through this insertion port 39.

When the user gets off and leaves the vehicle (motor vehicle) provided with this system body 10, he or she transforms the vehicle mounted electronic device into concealed condition in which the existence of this vehicle mounted electronic device is concealed.

The action of transforming into concealed condition is started based on a signal generated for example when the ignition key of the motor vehicle is switched to OFF position.

Therefore, the control unit of the vehicle mounted electronic device actuates the drive unit for a rotary motion 134 when it received a signal representing that ignition key is switched to OFF position when the vehicle mounted electronic device is in normal operating condition shown in Fig. 10, and at the moment when the counter counted a prescribed time period, it stops the drive unit for a rotary motion 134.

Then, the display panel 112 is rotated from normal operating condition shown in Fig. 10 to concealed condition shown in Fig. 11 in the direction of the arrow D by the drive unit for a rotary motion 134.

During the action from normal operating condition shown in Fig. 10 to concealed condition shown in Fig. 11, the concealing panel 140 journaled on the display panel 112 is rotated about the axial rods 142 by its own weight and moved into concealed condition in which it covers the outer surface of the control panel 114 to conceal the control panel 114.

Therefore, on the front face of the system body 10, the reverse face of the display panel 112, or the camouflaging decorative surface thereof designed to have uniformity with the peripheral portion where the system body 10 is to be installed is exposed, and the camouflaging decorative surface of the concealing panel 140 designed to have uniformity with the peripheral portion where the system body 10 is to be installed is also exposed as in the case of the reverse face of the display panel 112.

As a consequent, since the system body 10 of the vehicle mounted electronic device can camouflage as if no electronic device exists in the space for installing the same by means of camouflaging decorative surfaces of the display panel 112 and the concealing panel 140 in concealed condition, the vehicle mounted electronic device is effectively protected against theft.

In order to return from concealed condition to service condition, the drive unit for a rotary motion 134 is driven to rotate the display panel 112 by 180° in the direction shown by the arrow D. Then, in association with the rotation of the display panel 112 as shown in Fig. 12, the concealing panel 140 is operated to avoid and move over the control panel 114 about the axial rods 142 while being in sliding contact with the control panel 114.

In addition, when the display panel 112 continues to rotate, the concealing panel 140 moves away from the control panel 114 and rotates about the axial rods 142 in the state of being hung with its own weight, as shown in Fig. 13. When the display panel 112 returns to service condition (Fig. 9), the concealing panel 140 is brought into contact with the reverse face of the display panel 112 with its own weight.

As described above, the vehicle mounted electronic device according to the second embodiment is transformed sequentially from service condition, normal operating condition, concealed condition by rotating the display panel 112 always in the fixed direction shown by the arrow D by means of the drive unit for a rotary motion 134. Therefore, it can be operated without reversing the rotation of the motor or the like in the drive unit for a rotary motion 134, and thus the construction of the control unit can be simplified. The electronic devise may be constructed in such a manner that the action to return from concealed condition to service condition is started, for example, by a signal generated when the ignition key of the motor vehicle is switched from the OFF position to the ON position.

The construction of the electronic device according to the second embodiment described above may be applied not only to car stereos that is the vehicle mounted electronic device, but also to other various types of electronic devices for example for car navigation system provided with an exterior panel such as a front panel or the like. The panel 112 is not indispensable to have a camouflaging surface on one side, and it may be constructed in such a manner that both faces are formed with control surfaces or with display surfaces, or that one of the faces is formed with a display surface and the other face is formed with a control surface, as a matter of course.

The constructions, operations and effects of the second embodiment other than the ones described above are the same as the first embodiment, and thus they are not described here again.

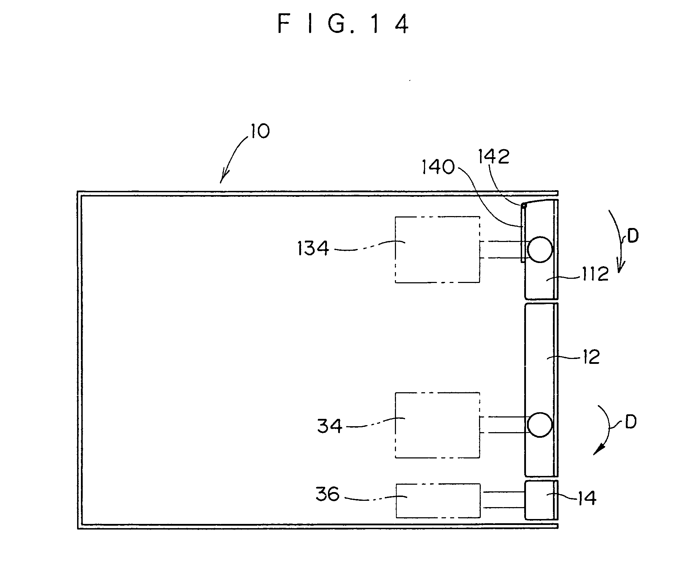

Referring now to Fig. 14 to Fig. 16, a third embodiment of the present invention will be described.

In the third embodiment, the panel portion on the front face of the system body 10 of the car stereo is divided into three portions; a display panel 12 as a first panel, a control panel 14 as a second panel, and a display panel 112 as a third panel.

The display panel 12 as the first panel is mounted so that it is rotated by the drive unit for a rotary motion 34. The control panel 14 as the second panel is mounted so that it is shifted linearly by the drive unit for a linear motion 36. The display panel 112 as the third panel is mounted so that it is rotated by the drive unit for a rotary motion 134.

As shown in Fig. 14 to Fig. 16, the display panel 12 is formed into a thick plate shaped block, and wide surface is provided with a display portion (not shown) such as a liquid crystal panel or the like, and when needed, with a various types of control buttons (not shown).

The reverse face of the display panel 12 is made up of a camouflaging decorative surface designed to have uniformity with the peripheral portion where the system body 10 is to be installed (not shown).

The control panel 14 is formed into a prism shaped block, and the surface corresponding to the front face thereof is provided with a various control switches (not shown), and as needed, with a display component (not shown) such as a liquid crystal display panel or the like.

The display panel 12 thus constructed is mounted in such a manner that it can be rotated by 180° to reverse its exposed face form the front face to the reverse face, and then from the reverse face to the front face by a drive unit for a rotary motion 34.

The drive unit for a rotary motion 34 is constructed to serve as a power transmission unit for transmitting a rotating power of the driving source such as a motor and concurrently as a unit for rotating the display panel 12 (not shown).

The control panel 14 is mounted in such a manner that it makes a linear reciprocating motion between the position facing toward the front face of the system body 10 and the stored position where it is retracted into the system body 10 by the drive unit 36 for a linear motion.

The drive unit for a linear motion 36 is constructed as a device for shifting the control panel 14 by a prescribed distance by a driving force of the drive source such as a linear motor, an actuator, or the like (not shown).

As shown in Fig. 14 to Fig. 16, the display panel 112 is formed into a thick plate shaped block, and the wide surface is provided with a display portion such as a liquid crystal panel or the like, and when needed, with a various types of control buttons (not shown).

The reverse face of the display panel 112 is made up of a camouflaging decorative surface designed to have uniformity with the peripheral portion where the system body 10 is to be installed (not shown).

The display panel 112 thus constructed is mounted in such a manner that it can be rotated by 180° to reverse its exposed face from the front face to the reverse face, and then rotated by 180° to reverse from the reverse face to the front face by a drive unit for a rotary motion 134.

The drive unit for a rotary motion 134 is constructed to serve as a power transmission unit for transmitting a rotating power of the driving source such as a motor and concurrently as a unit for rotating the display panel 112 (not shown).

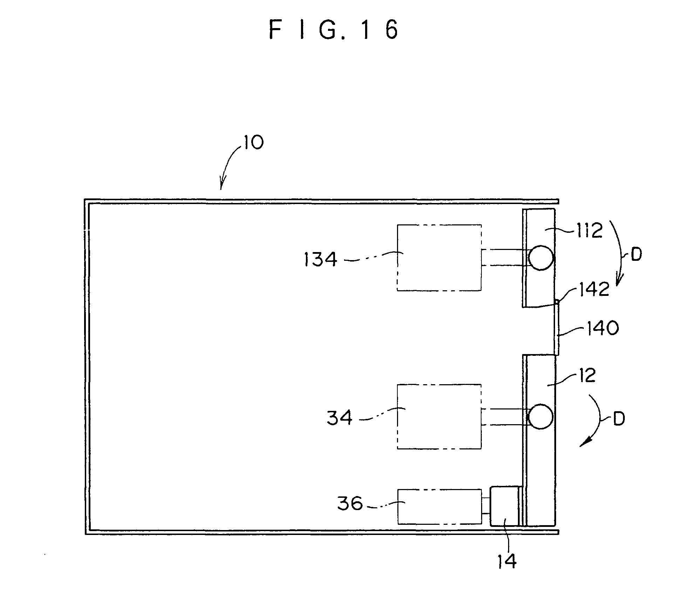

As shown in Fig. 16, in a state where the display panel 12 and the display panel 112 are reversed, a concealing panel 140 is mounted to cover the space (rectangular opening) generated between the display panel 12 and the display panel 112.

The concealing panel 140 is formed into an elongated plate slightly smaller than the space generated between the display panel 12 and the display panel 112. The concealing panel 140 is provided with axial rods 142 projecting from both ends of the length at one side of the width.

On the side surface of the concealing panel 140 facing toward the outside in Fig. 16, there is formed with a camouflaging decorative surface designed to have uniformity with the peripheral portion around the position where the system body 10 is installed as in the case of the reverse face of the display panel 12 and the display panel 112.

The concealing panel 140 in this arrangement is supported with the axial rods 142 on both ends received into a bearing portion formed at the corners of the end surface of the display panel 112 near the reverse face in such a manner that the concealing panel 140 can rotate between the retracted position where the plane of the concealing panel 140 abuts against the end surface of the display panel 112 and the closed position where the concealing panel 140 are flush with the end surface of the display panel 112.

In addition to the construction in which the display panel 12 and the control panel 14 are driven separately by a drive unit for a rotary motion 34 and a drive unit for a linear motion 36 as described above, the construction in which a single drive unit drives and controls the display panel 12 and the control panel 14 may be employed (not shown).

The construction where the display panel 12, the control panel 14, and the display panel 112 are driven respectively by a single drive unit may also be employed (not shown).

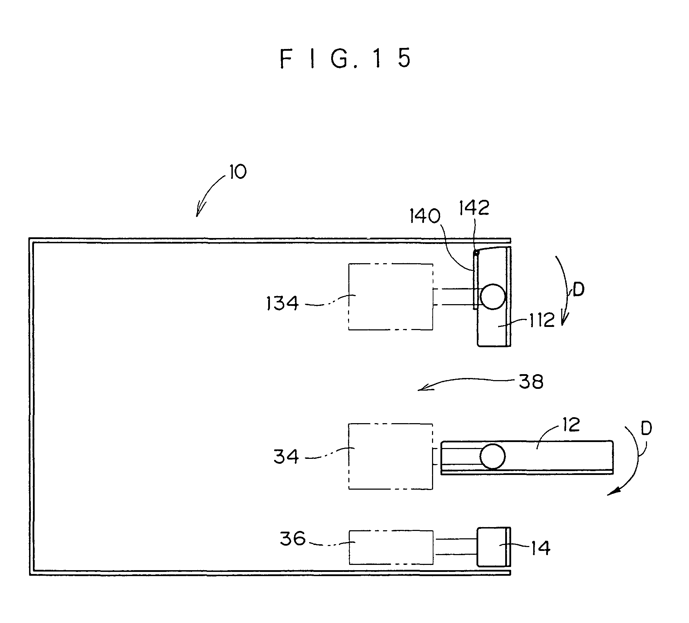

As shown in Fig. 15, in the system body 10, a player for recording and playing a recording disc (not shown) as a recording medium such as a Compact Disc or a Mini Disc is installed at the position inside the insertion port 38 of the system body 10 opening at the portion of the panel mounting position corresponding to the portion from the display panel 112 to the upper edge of display panel 12 when the display panel 12 is rotated by 90° sideways.

In the vehicle mounted electronic device constructed as described above according to the third embodiment, a detecting unit provided in the system body 10 detects that it is in the initial position of service condition shown in Fig. 14, and from this moment, the control unit (not shown) controls the drive unit for a rotary motion 34, the drive unit for a linear motion 36, the drive unit for a rotary motion 134 while counting by the counter for allowing the vehicle mounted electronic device to perform a prescribed action.

The operation and action of the vehicle mounted electronic device according to the third embodiment constructed as described above will now be described.

The vehicle mounted electronic device is, in service condition shown in Fig. 14, the display panel 12 and the display panel 112 exposes the display surfaces including a liquid crystal display panel and the like, and the control panel 14 exposes various control buttons on the front face of the system body 10.

When this vehicle mounted electronic device is in service condition, the user can make the vehicle mounted electronic device perform desired recording/playing action for the recording disc (CD, MD, etc.) by operating the control button on the control panel 14 while viewing on the display panel 12 and the display panel 112.

Subsequently, in order to load or unload the recording disc such as CD or MD into/from the player installed in the system body 10 of this vehicle mounted electronic device, the display panel 12 is transformed into normal operating condition.

In order to do this, the user operates a prescribed switch on the control panel 14 for transforming the vehicle mounted electronic device into normal operating condition. Then the control unit of the vehicle mounted electronic device actuates the drive unit for a rotary motion 34, and stops the drive unit for a rotary motion 34 when the counter counts a prescribed time periods.

Then the display panel 12 is rotated sideways from the position shown in Fig. 14 in the direction shown by the arrow D to normal operating condition by the drive unit for a rotary motion 34 (Fig. 15). In normal operating condition, the display panel 112 is not shifted, and thus the insertion port 38 is in the opened state.

Therefore, the CD, MD, or other recording discs are loaded or unloaded to/from the player (not shown) mounted in the system body 10 through this opened insertion port 38.

When the user gets off and leaves the vehicle (motor vehicle) provided with this system body 10, he or she transforms the vehicle mounted electronic device into concealed condition in which the existence of this vehicle mounted electronic device is concealed.

The action of transforming into concealed condition is started based on a signal generated for example when the ignition key of the motor vehicle is switched to OFF position.

Therefore, the control unit of the vehicle mounted electronic device actuates the drive unit for a linear motion 36 when it received a signal representing that ignition key is switched to OFF position when the vehicle mounted electronic device is in normal operating condition (Fig. 15), and at the moment when the counter counted a prescribed time period, it stops the drive unit for a linear motion 36.

Then, the control panel 14 is shifted from the position shown in Fig. 15 to the retracted position (Fig. 16) into the system body 10 by the drive unit for a linear motion 36.

During this action, the display panel 12 is immobilized because the drive unit for a rotary motion 34 is in halt condition.

The control unit then rotates the display panel 12 from the state shown in Fig. 15 to concealed condition (Fig. 16) in the direction of the arrow D by driving the drive unit for a rotary motion 34 with the drive unit for a linear motion 36 kept in halt condition.

The control unit rotates the display panel 112 from the state shown in Fig. 15 to concealed condition (Fig. 16) by 180° in the direction shown by the arrow D by driving the drive unit for rotary motion 134.

During the action from normal operating condition (Fig. 14) to concealed condition (Fig. 16), the concealing panel 140 journaled on the display panel 112 rotates about the axial rods 142 by its own weight and moved into the closed position in which the concealing panel 140 is developed to be flush with the end surface of the display panel 112. With this movement, the concealing panel 140 covers and conceals the clearance generated between the display panel 12 and the display panel 112.

Therefore, on the front face of the system body 10, the reverse faces of the display panel 12 and the display panel 112, or the camouflaging decorative surface thereof designed to have uniformity with the peripheral portion where the system body 10 is to be installed are exposed, and the camouflaging decorative surface of the concealing panel 140 designed to have uniformity with the peripheral portion where the system body 10 is to be installed is also exposed as in the case of the reverse face of the display panel 112.

As a consequent, since the system body 10 of the vehicle mounted electronic device can camouflage as if no electronic device exists in the space for installing the same by means of camouflaging decorative surfaces of the display panel 12, the display panel 112, and the concealing panel 140 in concealed condition, the vehicle mounted electronic device is effectively protected against theft.

In order to return from concealed condition to service condition, the drive unit for a rotary motion 134 is driven to rotate the display panel 112 by 180° in the direction shown by the arrow D. Then, in association with the rotation of the display panel 112 in the state as shown in Fig. 16, the concealing panel 140 is rotated about the axial rods 142 by its own weight and returned to service condition (Fig. 14).

Concurrently, the drive unit for a rotary motion 34 and the drive unit for a linear motion 36 are operated in reverse of the way described above, so that the display panel 12 is reversed and the control panel 14 is moved from the retracted position to the position facing toward the front surface of the system body 10 to return to normal operating condition (Fig. 16), or further to service condition (Fig. 14).

The electronic devise may be constructed in such a manner that the action to return from concealed condition to service condition is started, for example, by a signal generated when the ignition key of the motor vehicle is switched from the OFF position to the ON position.

It is also possible to construct the electronic device in such a manner that it returns from service condition directly to concealed condition, or from concealed condition directly to service condition.

In this embodiment, since the panel is divided, the distance of radius of rotation of the first panel decreases, and thus the space required for rotation is also reduced. It is quite important to reserve the space for installing the device (to reduce the space required for rotation) on the side of the system body.

In addition, by rotating the divided panels, the radius of rotation of each panel may be reduced, and thus the space within the panel can be used effectively.

In this embodiment, the timing of movement of both panels may be determined as appropriate by the configuration of the cam groove. In this way, by moving the first panel after the second panel is moved, the probability of occurrence of interference between these panels is eliminated. By actuating these panels simultaneously, the time required for terminating the action may be reduced.

The constructions, operations and effects of the third embodiment other than the ones described above are the same as the first embodiment or the second embodiment, and thus they are not described here again.

The present invention is not limited to each embodiment described above, and a number of panel members may be mounted on the front face portion of the system body 10 so that they can be driven by the drive mechanism, as a matter of course.

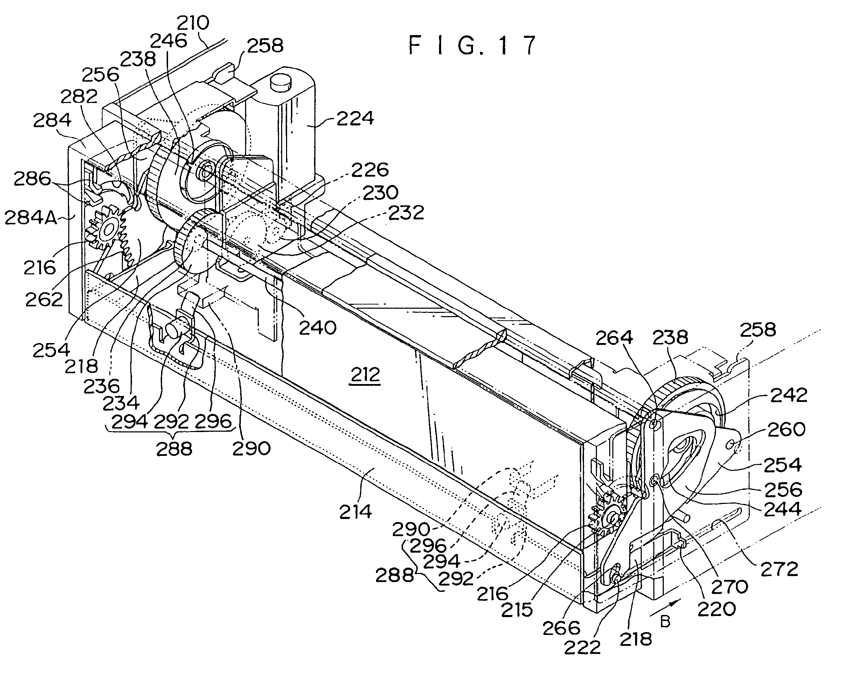

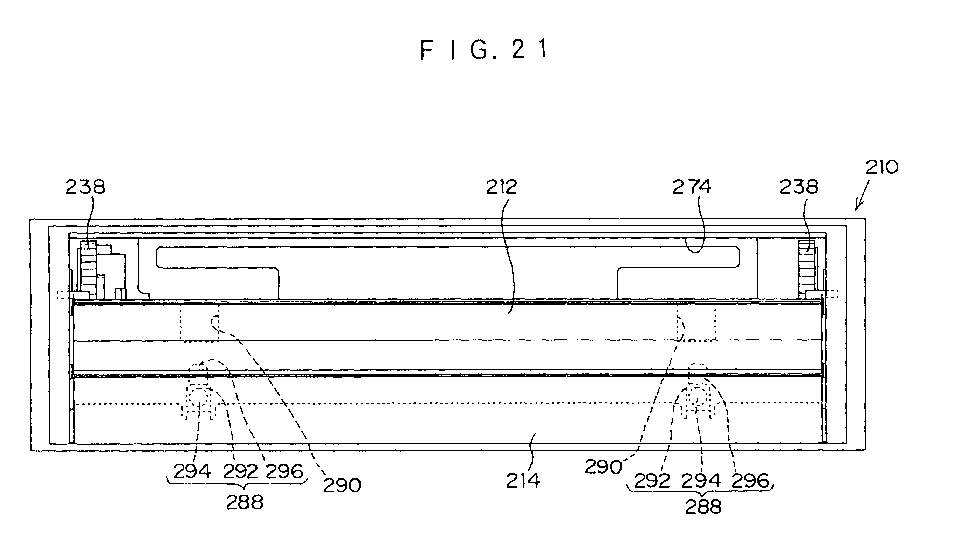

Referring now to the drawings, a fourth embodiment of the electronic device according to the present invention will be described. In Fig. 17 to Fig. 21, the principal portion including panel portions to be driven by the drive mechanism in the vehicle mounted electronic device according to this embodiment.

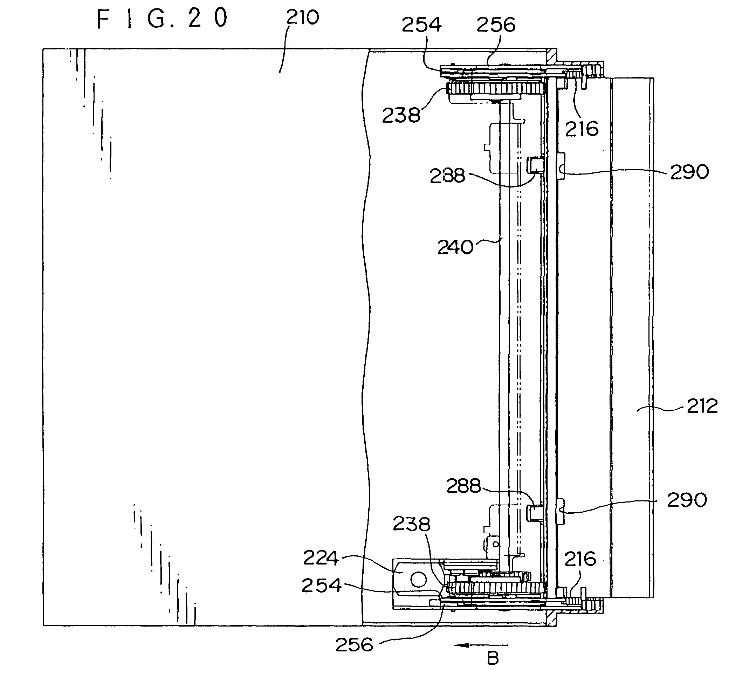

The vehicle mounted electronic device shown in the figure is constructed as a car stereo to be installed on the instrument panel or the like in the car interior, and as shown in Fig. 20, a set of panel members and a drive mechanism for driving the same are mounted on the front face portion of the system body 210, which serves as a part of metallic chassis of the car stereo.

A set of the panel members to be mounted at the panel mounting position located at the front face portion of the system body 210 is constructed of a display panel 212 as a first panel including a display portion (not shown), and a control panel 214 as a second panel including control switches (not shown) disposed thereon.

The display panel 212 is formed into a thick plate shaped block as shown in the figure, and its wide surface is provided with display portions (not shown) including a liquid crystal display panel, and when needed, with a various types of control buttons (not shown).

In addition, the reverse face of the display panel 212 is made up of a camouflaging decorative surface designed to have uniformity with the peripheral portion where the system body 210 is to be installed.

The control panel 214 is formed into a prism shaped block as shown in the figure, and the surface corresponding to it front face is provided with various control buttons (not shown), and when needed, with a liquid crystal display or other display components (not shown).

The display panel 212 and the control panel 214 thus constructed are operated in such a manner that the control panel 214 is linearly shifted from the front surface toward the inside of the system body 210 in conjunction with the rotating action of the display panel 212, by the driving mechanisms respectively mounted on the opposing ends, or both ends of the length of the respective panels.

Therefore, the display panel 212 is provided with a driven gear 216 fixed on each axial rod 215 projecting from both opposing ends of the length at one side of the width. The display panel 212 is rotatably mounted at the front face portion of the system body 210 with each axial rod 215 fitted into the axial bore of the supporting member 258 so that the display panel 212 can expose the front face or the reverse face by rotating about the axial rod 215.

The control panel 214 is provided with a long plate shaped supporting strip 218 extending along the direction of movement on both ends thereof. Each supporting strip 218 is provided with a guiding projection 220 formed by bending the free end thereof to the right angle and a small column shaped driven locking member 222 provided uprisingly on the side surface.

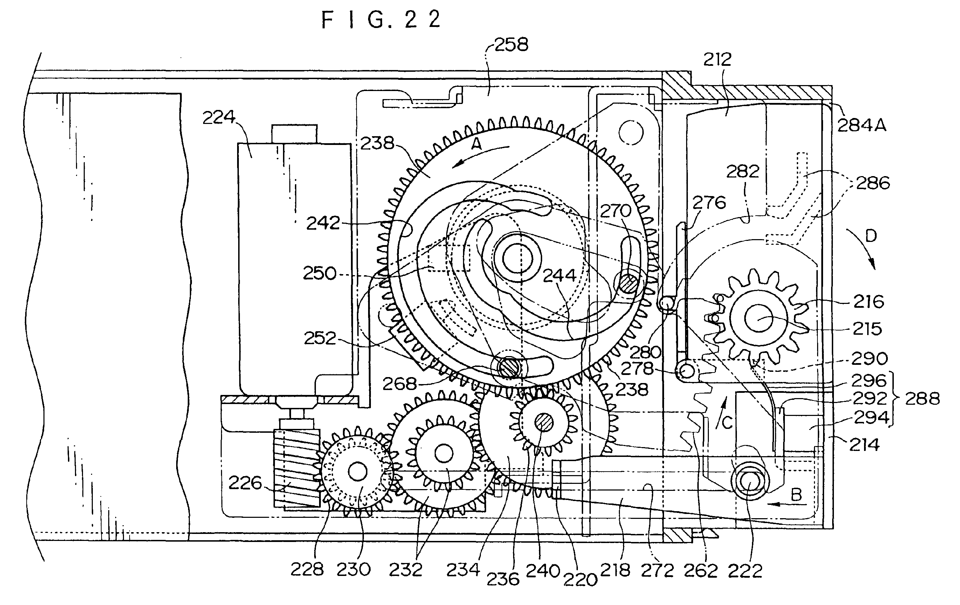

As shown in Fig. 22, the drive mechanism is driven by the driving motor 224 as a driving source mounted on one of the side portions of the system body 210.

The driving motor 224 is fixed with a worm 226 for a speed reducing gear mechanism on its output shaft. The worm 226 engages with the worm gear 228, and subsequently, with a first double-gear 230, a second double-gear 232, and a third double-gear 234 sequentially. Then, one of the pair of output gears 236 integral with the third double-gear 234 is engaged with the external gear of a pair of cam gears 238.

One of the output gear pair 236 integral with the third double-gear 234 on one of the side portions of the system body 210 has an axial rod 240 extended to the other side portion, and at the other end of the axial rod 240, the other one of the pair of output gears 236 (which is not integral with the third double-gear 234) is fixed. In other words, one of the pair of output gears 236 integral with the third double-gear 234 disposed on both side portions of the system body 210 and the other one of the pair of output gears 236 are connected by an axis rod 240 so that they rotates simultaneously.

The other one of the pair of output gears 236 that is not integral with the third double-gear 234 engages the external gear of the pair of cam gears 238 supported on the other side portion of the system body 210.

By rotating the driving motor 224 with the speed reducing gear mechanism constructed as described above, one of the pair of cam gears 238 engaged with one of the pair of output gears 236 integral with the third double-gear 234 is rotated via the worm 226 the worm gear 228, the first double-gear 230, the second double-gear 232, and the third double-gear 234, and the other one of the pair of cam gears 238 engaged with the other one of the pair of output gears 236 is simultaneously rotated via the axial rod 240.

Each one of the pair of cam gears 238 is formed with a cam groove 242 for operating the display panel 212 and a cam groove 244 for operating the control panel 214.

Each of the pair of cam gears 238 is provided on its side face portion facing toward the inside of the system body 210 with a ring-shaped body to be detected 246 being concentric with the axis of rotation of the pair of cam gears 238 and formed with notches 246A at three points thereon projecting for detecting the rotated position of the pair of cam gears 238.

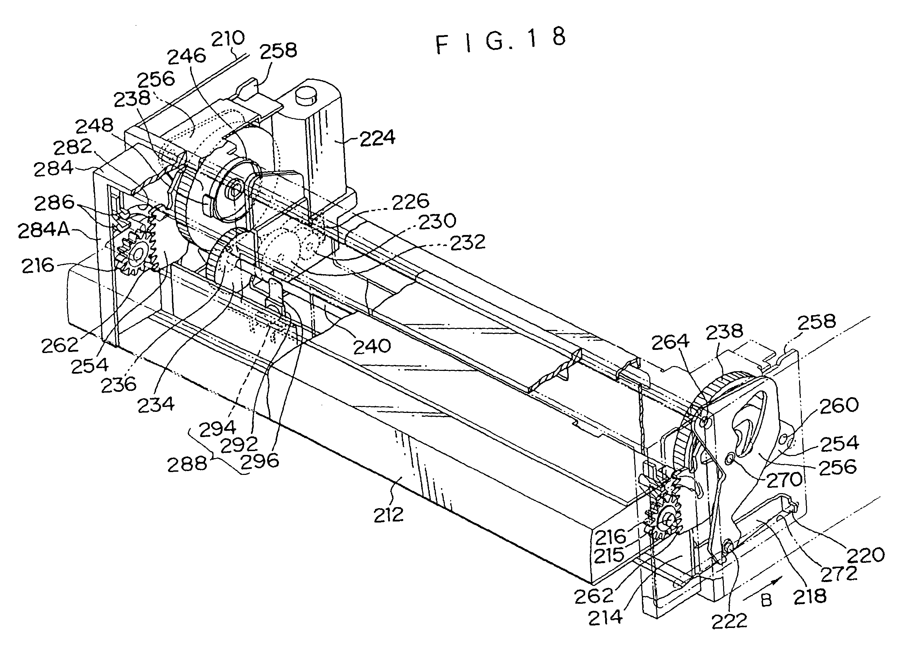

In addition, each of the pair of cam gears 238 is provided on its side face portion facing toward the inside of the system body 210 at the prescribed position with a small arcuate shaped striker 248 projecting for detecting the rotating position of the pair of cam gears 238 (shown in Fig. 18).

Within the system body 210, a photo sensor 250 for optically detecting notches 246A of the body to be detected 246 and a switching member 252 to be turned on and off by the striker 248 are disposed at the corresponding positions respectively.

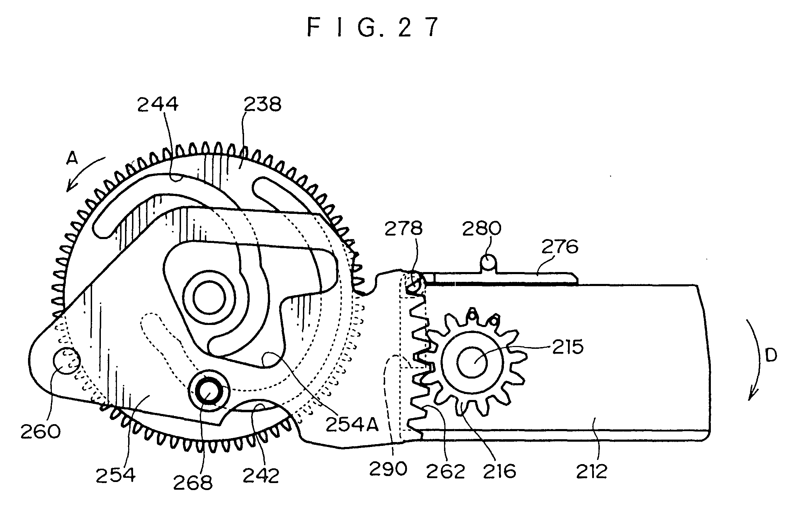

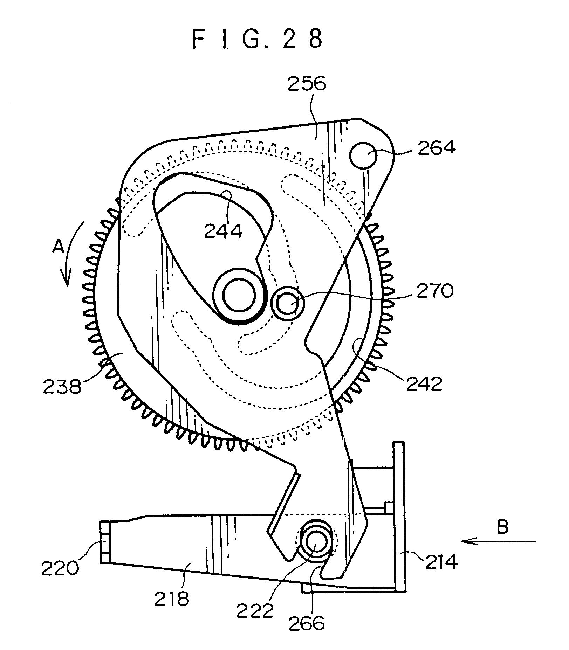

A first operating follower 254 as a follower of the cam groove 242 for operating the display panel 212 and a second operating follower 256 as a follower of the cam groove 244 for operating the control panel 214 are journaled on the supporting members 258 fixedly mounted in the vicinity of both sides of the system body 210 respectively (Fig. 17 to Fig. 20, Fig. 23, Fig. 27 and Fig. 28).

The operating follower 254 for the display panel 212 is formed into an irregular shaped plate to be supported by the supporting member 258 at its proximal portion via an axial pin 260. The operating follower 254 is provided on its free end with a sector portion 262 having teeth formed thereon. The sector portion 262 engages the driven gear 216 of the display panel 212.

The driven pin 268 projected from the prescribed position of the operating follower 254 is inserted into the cam groove 242 for operating the display panel 212. In addition, the operating follower 254 is provided with a release opening 254 A at its prescribed position.

The driven pin 268 is driven by the action of the cam groove 242 when the pair of cam gears 238 rotates with the cam groove 242, and the operating follower 254 thus mounted swings about the axial pin 260 accordingly.

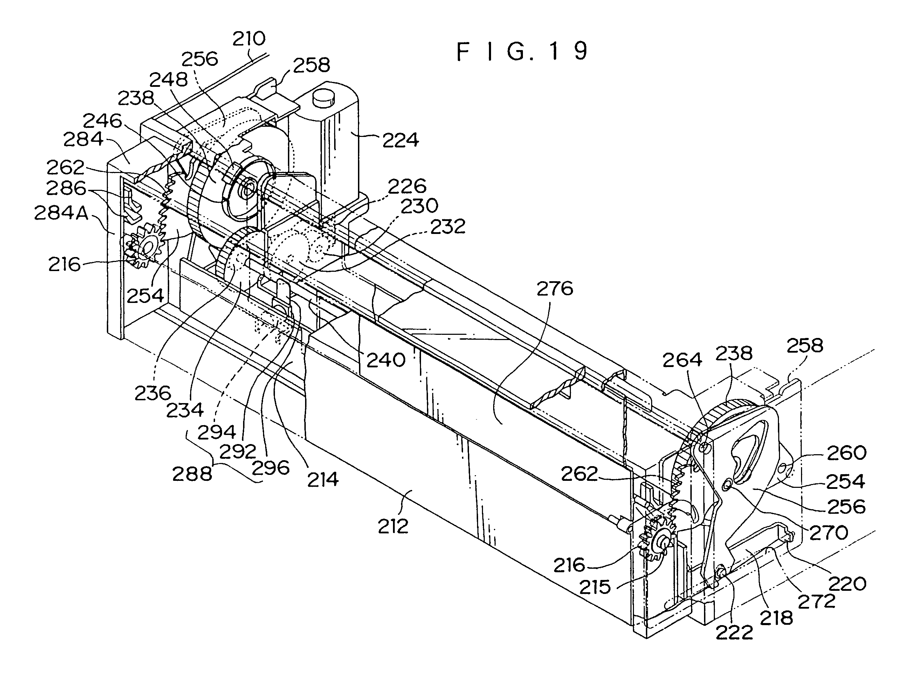

Then, the sector portion 262 of the operating follower 254 swings, and the driven gear 216 engaged therewith is rotated, so that the display panel 212 rotates by 180° between the position shown in Fig. 17 and the position shown in Fig. 19 integrally with the driven gear 216.

The operating follower 256 for the control panel 214 is formed into an irregular shaped plate to be supported by the supporting member 258 at its proximal portion via an axial pin 264. The operating follower 256 is provided on its free end with an operating clamping portion 266 formed with an inverted U-shaped notch, in which the small column shaped driven locking member 222 projecting from the supporting strip 218 is slidably arranged.

Then the tip portion of the driven locking member 222 passed through the notch on the operating clamping portion 266 is slidably inserted into the guide groove 272 in the shape of elongated hole formed on the supporting member 258. Concurrently, the guiding projection 220 of the supporting strip 218 is slidably inserted into the guide groove 272. Accordingly, the control panel 214 is supported linearly slidably along the direction from the front surface toward the inside of the system body 210 with the driven locking member 222 and the guiding projection 220 on each supporting strip 218 on both ends thereof guided along the guiding groove 272.

The operating follower 256 is arranged by passing the driven pin 270 projecting from the prescribed position thereof through the release opening 254A of the operating follower 254 and then inserting the same into the cam groove 244 for operating the control panel 214.

The driven pin 270 is driven by the action of the cam groove 244 when the pair of cam gears 238 rotates with the cam groove 244 for operating the control panel 214, and the operating follower 256 thus mounted swings about the axial pin 264 accordingly.

Then, the operating clamping portion 266 of the operating follower 256 swings, and accordingly the driven locking member 222 clamped thereby is operated, so that the driven locking member 222 and the guiding projection 220 of the control panel 214 is guided along the guiding groove 272, and accordingly the control panel 214 is linearly shifted between the position shown in Fig. 17 and the position shown in Fig. 19 in the direction from the front surface toward the inside of the system body 210 or in the reverse direction thereof.

In the system body 210, a player (not shown) for recording and playing a recording disc as a recording medium such as a Compact Disc or a Mini Disc is installed at the position inside the insertion port 274 of the system body 210 opening at the portion of the panel mounting position corresponding to the upper side to the upper edge of the display panel 212 when the display panel 212 is rotated by 90° sideways (Fig. 18, Fig. 21, and Fig. 29).

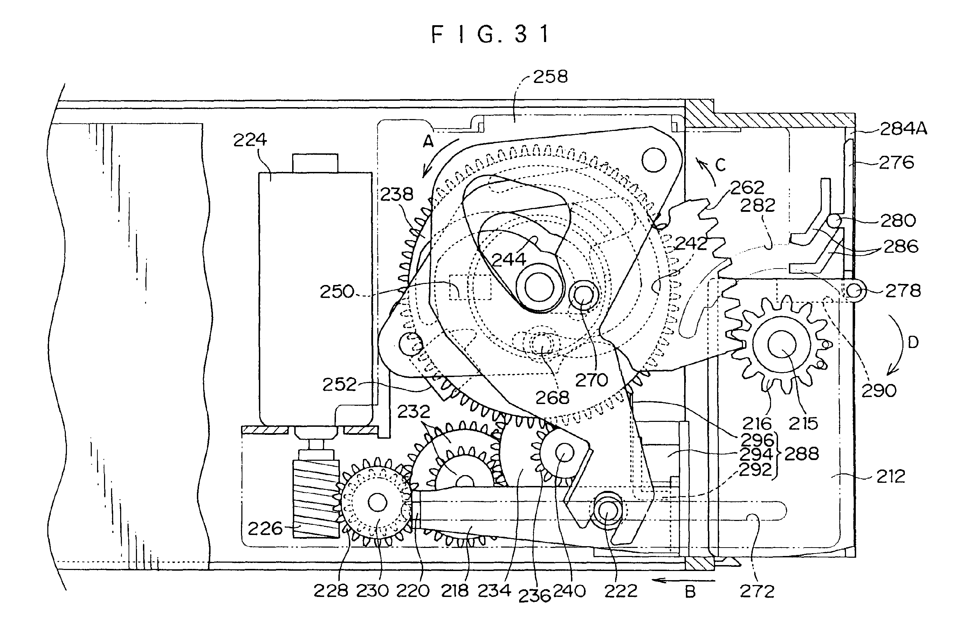

In the state where the display panel 212 is reversed (Fig. 19 and Fig. 31), a concealing panel 276 is mounted to close the insertion port 274.

The concealing panel 276 is formed into an elongated plate slightly smaller than the insertion port 274. The concealing panel 276 is provided with axial rods 278 projecting from both ends of the length at one side of the width, and with a driven member 280 having a round rod shape projecting from both ends at the center of the width.

The side surface of the concealing panel 276 that faces outward (Fig. 19 and Fig. 31) is formed with a camouflaging decorative surface designed to have uniformity with the peripheral portion around the position where the system body 210 is installed as in the case of the reverse face of the display panel 212.

The concealing panel 276 in this arrangement is supported with the axial rods 278 on both ends received into a bearing portion formed at the corners of the end surface of the display panel 212 near the reverse face in such a manner that the concealing panel 276 can rotate between the retracted position where the plane of the concealing panel 276 abuts against the end surface of the display panel 212 and the closed position where the concealing panel 276 stands upward at a right angle to the end surface of the display panel 212.

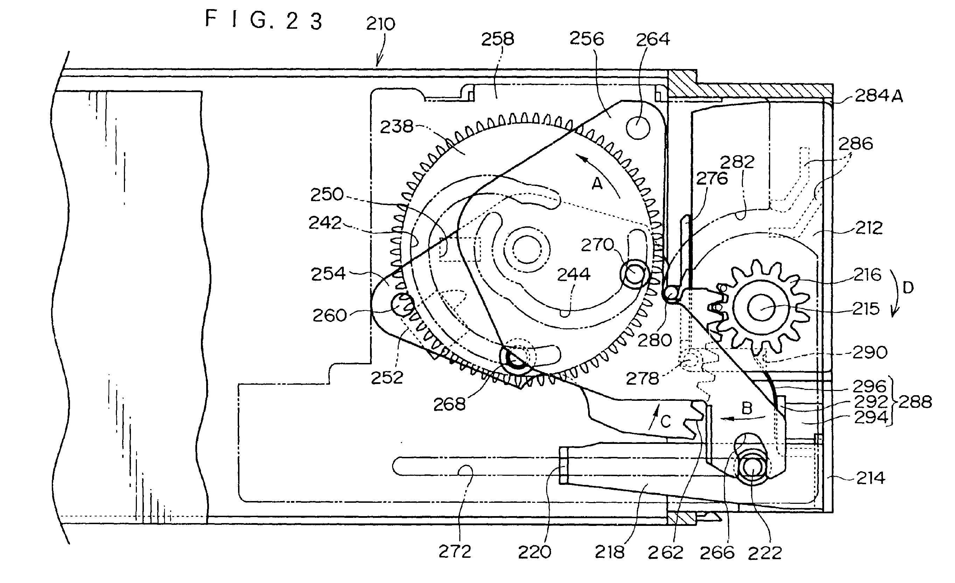

In order to shift the concealing panel 276 journaled on the display panel 212 between the retracted position and the closed position in conjunction with the action of the display panel 212, an arcuate shaped guiding groove for rotary motion 282 through which the driven member 280 is slidably inserted and guided is formed at the prescribed position of the supporting member 258 (Fig. 17 and Fig. 23).

On the inner surface of the decorative frame member 284 fixed around the front face of the system body 210, there are provided guiding portions 286 so as to continue from the exit of the guiding groove for a rotary motion 282 formed on the supporting member 258, thorough which the driven member 280 is slidably inserted and guided.

In other words, the guiding portions 286 are formed as two small walls being bent and standing upward arranged side by side so as to continue from the inner surface of the decorative frame member 284 (Fig. 17 and Fig. 22). These guiding portions 286 are constructed as grooves for guiding the driven member 280 from the exit of the guiding groove for a rotary motion 282 toward the reverse face of the vertical plate portion 284A of the decorative frame member 284 located at front on both sides.

In the vehicle mounted electronic device constructed as described above according to this embodiment of the present invention, a control unit (not shown) detects the moment when the photo sensor 250 optically detected the notch 246A of the body to be detected 246 in a state in which the striker 248 as a detecting unit mounted in the system body 210 is turning the switching member 252 ON as a initial position of service condition (Fig. 17, Fig. 22, and Fig. 23), and from this moment, the control unit (not shown) controls the driving motor 24 while counting by a counter for allowing the vehicle mounted electronic device to perform a prescribed action.

In the vehicle mounted electronic device in service condition (Fig. 17, Fig. 22, and Fig. 23), the display panel 212 mounted at the front face portion of the system body 210 exposes the display surface including a liquid crystal display panel or the like, and the control panel 214 exposes various control buttons on the front face of the system body 210(Fig. 17 to Fig. 26, and Fig. 29 to Fig. 31).

The vehicle mounted electronic device is provided with a braking unit for panels in order to prevent unstable movement of the display panel 212 and the control panel 214 due to backlash or rattling when the user controls the control button on the control panel 214 for making the vehicle mounted electronic equipment perform a desired action while viewing one the display panel 212 in this service condition.

In this braking unit for panels, resilient pressing members 288 and portions to be abutted 290 are formed on the display panel 212 and the control panel 214 at the corresponding two positions each.

In order to construct the braking unit for panels, the resilient pressing members 288 are formed on the control panel 214, and portions to be abutted 290 on which the resilient pressing members 288 press are formed on the display panel 212.

The resilient pressing members 288 are disposed at two positions on the control panel 214 near both ends of the length (Fig. 17).

In order to do so, a supporting strip 292 is provided from the metallic plate member arranged on the reverse side of the control panel 214 toward the display panel 212 so as to be bent into a hook shape and take an upright position.

A column shaped female screw portion 294 projecting from the plastic panel member on the front side of the control panel 214 faces toward the free end of the supporting strip 292.

In addition, the free end of the supporting strip 292 is formed with a though hole, and the female screw portion 294 is formed with a female screw hole so as to be in communication with the through hole.

Then, a spring member 296 formed of a small resilient leaf spring material of small rectangular shape along the width of the prescribed side surface in a shape of shallow groove.

The abutting face 290 is constructed so that the free end of the spring member 296 coming from the side of the reverse face of the display panel 212 encroaches from the opened end of the rectangular groove and is detachably pressed and abutted against the wall end near the widthwise center of the prescribed side surface.

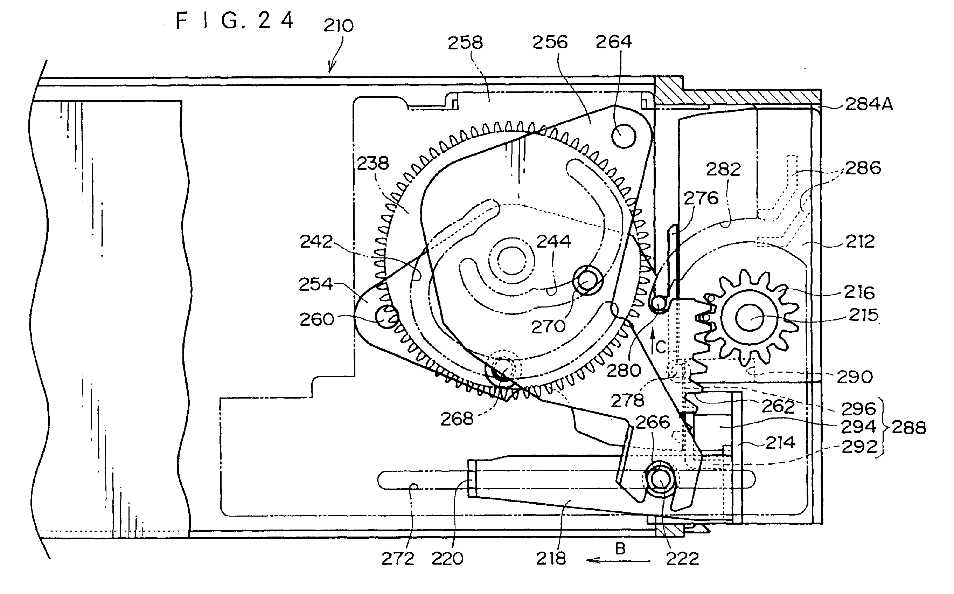

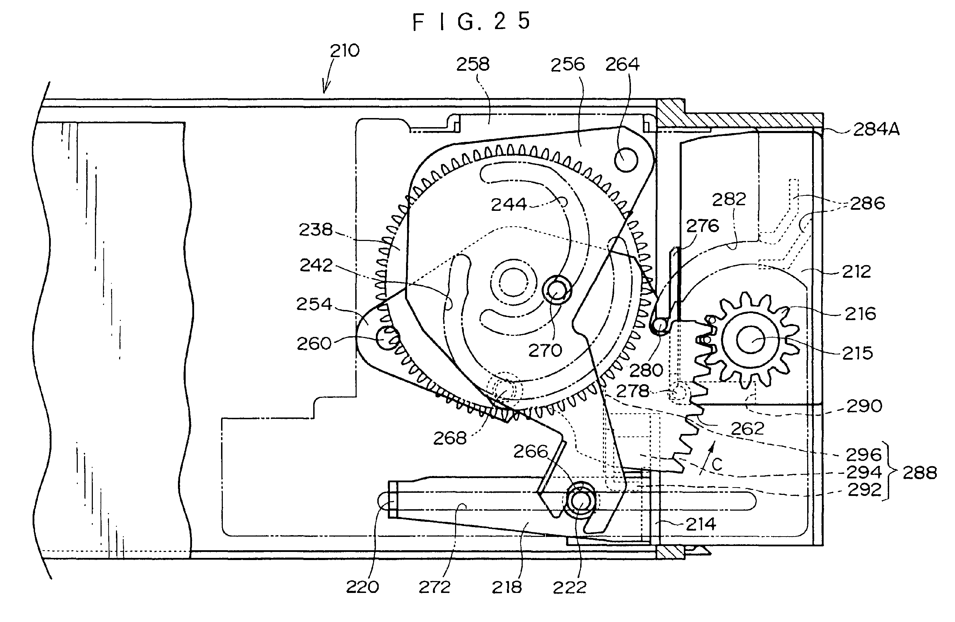

In the braking unit for panels constructed as described above, movement of the control panel 214 from the position shown in Fig. 25 in the direction opposite from that shown by the arrow B allows the tip portion of the spring member 296 of the resilient pressing member 288 to enter into the abutting face 290 (Fig. 24).

The movement of the control panel 214 in the direction opposite to that shown by the arrow B makes the tip portion of the spring member 296 move through the inside of the abutting face 290, and abut against the wall end of the abutting face 290 near the widthwise center of the side surface of the control panel 214.

The control panel 214 further moves in the direction opposite from that shown by the arrow B to the position shown in Fig. 22 and Fig. 23 while resiliently deforming the spring member 296 of the resilient pressing member 288 so that the spring member 296 resiliently presses is provided, and formed with a through hole at one end. The spring member 296 is placed along the supporting strip 292 with the through hole held in communication with the through hole on the supporting trip 292, and a screw part (not shown) is passed through the through hole formed on the spring member 296 from the head portion, and then through the trough hole on the supporting strip 292, and screwed into the female screw hole on the female screw portion 294 to fasten the spring member 296 onto the supporting strip 292.

In this way, the spring member 296 fastened on the supporting strip 292 is arranged with its free end projected by a prescribed distance toward the display panel 212.

The portions to be abutted 290 formed on the display panel 212 are disposed at two positions on the control panel 214 corresponding to the spring member 296.

Each abutting face 290 is formed on the side surface of the display panel 212 on the side where the driven gears 216 are mounted when viewed widthwise. The abutting face 290 is provided on the display panel 212 at a prescribed side surface with a rectangular groove. The rectangular groove for the abutting face 290 opens toward the reverse face of the prescribed side surface of the display panel 212, and extends almost to the midway the abutting face 290 in the direction opposite from that shown by the arrow B.

Accordingly, the display panel 212 is applied with an urging force to rotate it about an axial rod 215 in the direction opposite to that shown by the arrow D to absorb play or rattling in order to smooth backlash or the action at the driven gear 216 of the driving mechanism for driving the display panel 212, the sector portion 262 that engages therewith, the cam mechanism, or the gear train driven in conjunction with the driving motor 224, so that the display panel 212 resists moving.

Therefore, the unstable movement of the display panel 212 when the user touches the display on the display panel 212, or when the user presses the control switch on the display panel 212 if any is prevented to improve the user's feeling of usage.

The control panel 214 is, in the state shown in Fig. 22 or Fig. 23, applied with a reaction force generated when the spring member 296 of the resilient pressing member 288 resiliently presses the abutting face 290 of the display panel 212.

Therefore, the control panel 214 is applied with an urging force in the direction shown by the arrow B on the driving mechanism operated in conjunction therewith via the driven locking member 222 to absorb play or rattling in order to smooth backlash or the action at the cam mechanism in relation to the operating follower 256 of the driving mechanism for driving the control panel 214, or at the gear train driven in conjunction with the driving motor 224, so that the control panel 214 resists moving.

Therefore, the unstable movement of the control panel 214 generated when the user presses and control the control switch on the control panel 214 may be prevented, thereby improving the user's feeling of usage.

According to the vehicle mounted electronic device according to this embodiment, in non-service condition where the car stereo body is concealed (that is, concealed condition) (Fig. 19, Fig. 31, and Fig. 35), the control panel 214 is retracted from the front face of the system body 210 into the system body and the display panel 212 is reversed and covers on the front surface of the control panel 214. Concurrently, the display panel 212 is set to the state where the camouflaging decorative surface designed to have uniformity with the peripheral portion where the system body 210 is installed behind is exposed(Fig. 17 to Fig. 26, and Fig. 29 to Fig. 31).

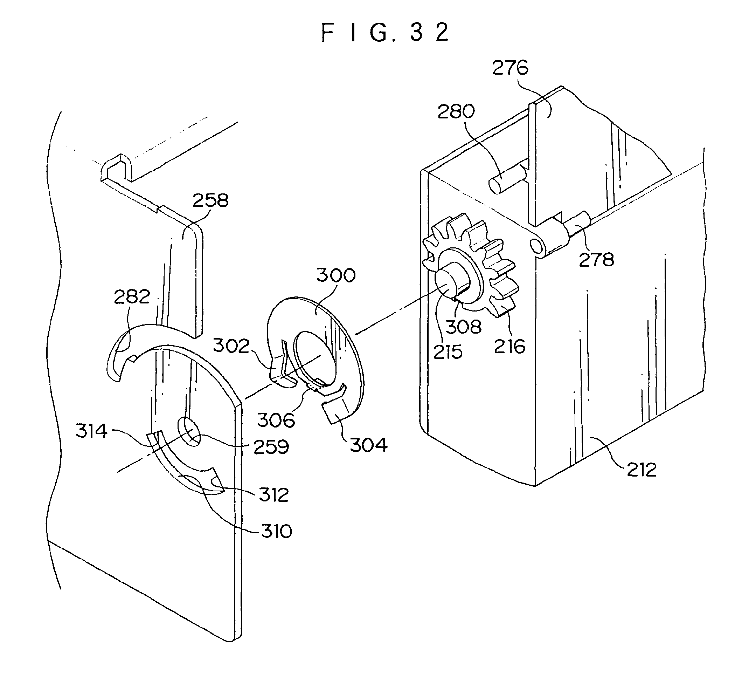

In order to avoid the unstable movement of the control panel occurred due to backlash or rattling when the user touches the concealing surface on the reverse face of the control panel, or the unstable vibration of the control panel occurred due to backlash or rattling when the vibration is applied from the outside in non-service condition, the vehicle mounted electronic device according to the fifth embodiment is provided with a braking unit for panels between the display panel 212 and the supporting member 258 (Fig. 32 to Fig. 37).

In order to construct the braking device for panels, the driven gear 216 of the display panel 212 is provided with an urging member 300. The urging member 300 is formed into an integrated configuration by press molding spring material or other resilient ring shaped plate material. The urging member 300 is formed with a pair of urging operation elements 302, 304 so as to be opposed with respect to each other.

These urging operation elements 302, 304 are formed into a resiliently deformable cantilever leaf spring by cutting the prescribed portions of the ring shaped plate material along the arc respectively and then pressing and bend it into approximately V-shape.

The urging member 300 is provided with a locking projection 306 integrally at the midsection between the pair of urging operation elements 302, 304. The locking projection 306 is formed into a small rectangular shape so as to project at right angle in the direction opposite to the urging operation elements 302, 304 projecting in V-shape from the ring shaped plate surface of the urging member 300.

The urging member 300 constructed as described above is fixed with its pair of urging operation elements 302, 304 agreed with the toothless portion of the driven gear 216 and with the locking projection 306 fitted into the recess 308 formed on the toothless portion of the driven gear 216, so as to rotate integrally with the driven gear 216.

In order to construct a braking unit for panels, the supporting member 258 is provided with an actuating portion 310 corresponding to the urging member 300 fixed on the driven gear 216. The actuating portion 310 is provided within the range of rotation of the urging operation elements 302, 304 around the axial bore 259 formed on the supporting member 258.

The actuating portion 310 is constructed in such a manner that when the driven gear 216 rotates to each prescribed position, it acts on any one of urging operation elements 302, 304 to rotate the driven gear 216 by a small angle in the prescribed direction by any one of these urging operation elements 302, 304, or both of them. In this embodiment, it is constructed as an arcuate opening formed on the supporting member 258.

The actuating portion 310 is formed as operating ends 312, 314 for bringing the arcuate ends into sliding contact with the urging operation elements 302, 304 respectively. The urging member 300 is resiliently deformed when the tip of each urging operation element 302, 304 is brought into sliding contact with the side surface of the supporting member 258 by rotating about the axial bore 259.

Concurrently, the urging member 300 is urged to rotate in the direction of rotation in such a manner that when each urging operation element 302, 304 is entered into the opening of the actuating portion 310, the oblique line of each urging operation element 302, 304 is brought into press contact with the corresponding operating end 312, 314.

In other words, when each urging operation element 302, 304 is in press contact with each operating end 312, 314 of the actuating portion 310, the urging member 300 is urged to rotate in the direction where an urging force of the urging operation element 302, 304 acts along the direction of the rotation of the urging member 300 by a reaction force relating resilient deformation of these urging operation elements 302, 304.

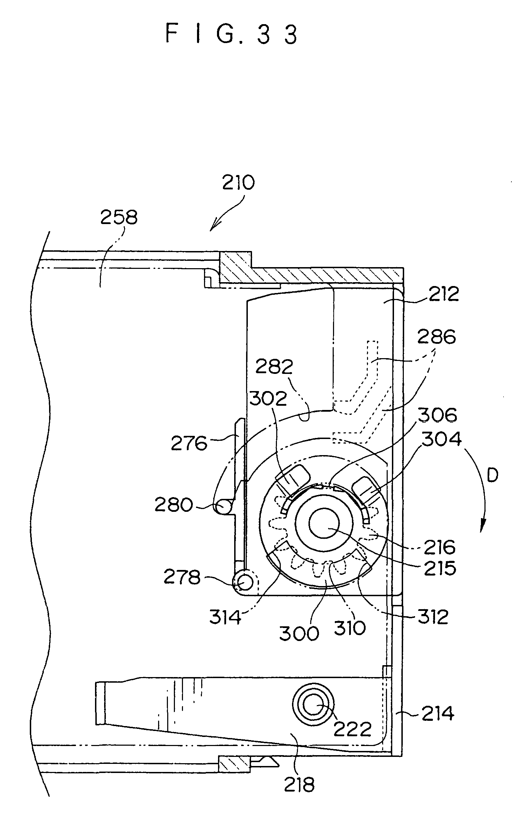

In service condition in which the display panel 212 mounted at the front face of the system body 210 so as to rotate integrally with the driven gear 216 exposes a display surface including a liquid crystal panel or the like, the control panel 214 exposes various control buttons (Fig. 33), so that the display panel 212 on exposes, the urging member 300 constructed in such a manner is in a state in which each urging operation element 302, 304 of the urging member 300 is resiliently deformed and brought into sliding contact with the plane of the supporting member 258.

The urging member 300 does not apply the driven gear 216 in this state with an urging force in the direction of rotation. However, the action of the display panel 212 being integral with the driven gear 216 such as rattling can be reduced by friction between the plane of the supporting member 258 and each urging operation element 302, 304.

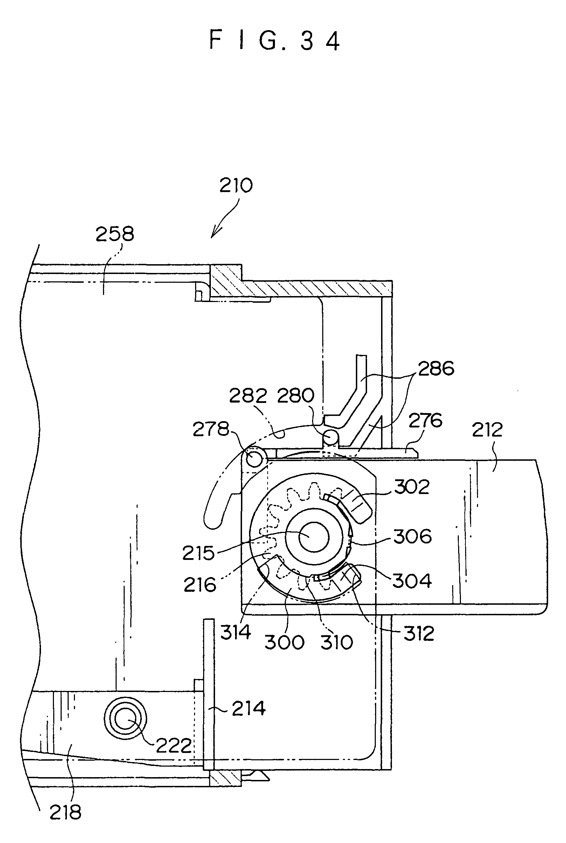

Then, the electronic device is brought into normal operating condition in which the display panel 212 is rotated in the direction shown by the arrow D by 90° sideways so that the CD, MD, or other recording medium can load or unload to/from the player in the system body 210 through the insertion port 274 (Fig. 34).

In this normal operating condition, the urging member 300 rotates integrally with the driven gear 216 that rotates the display panel 212, and one of the urging operation elements 304 is fitted into the actuating portion 310. In this condition, the oblique line at the tip of the urging operation element 304 is in press contact with the operating end 312 and urges the urging member 300 to rotate in the direction shown by the arrow D.

Accordingly, the display panel 212 is applied with an urging force for rotating the same about the axial rod 215 in the direction shown by the arrow D to absorb play or rattling in order to smooth backlash or the action at the driven gear 216 of the driving mechanism for driving the display panel 212, the sector portion 262 that engages therewith, the cam mechanism, or the gear train driven in conjunction with the driving motor 224, so that the display panel 212 resists moving.

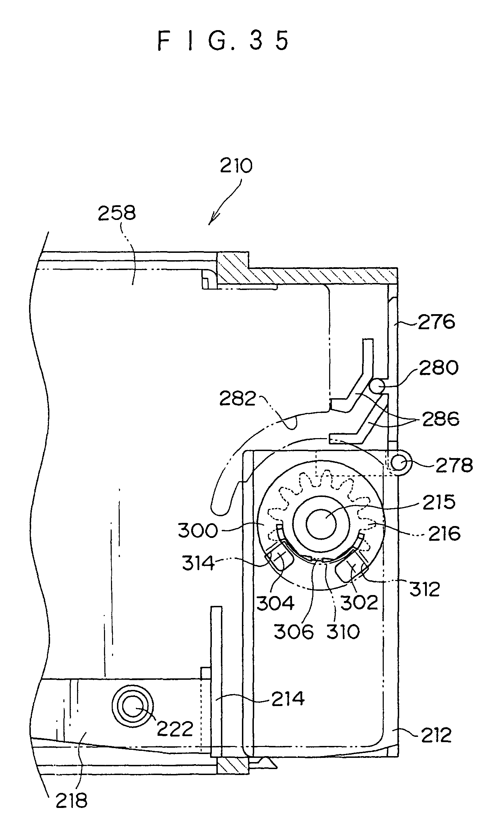

Subsequently, when the display panel 212 further rotates in the direction shown by the arrow D, the display panel 212 rotates by 180° and is reversed, and covers the front surface of the control panel 214 retracted in the system body 210 and transformed into concealed condition where the existence of the vehicle mounted electronic device is concealed (Fig. 35).

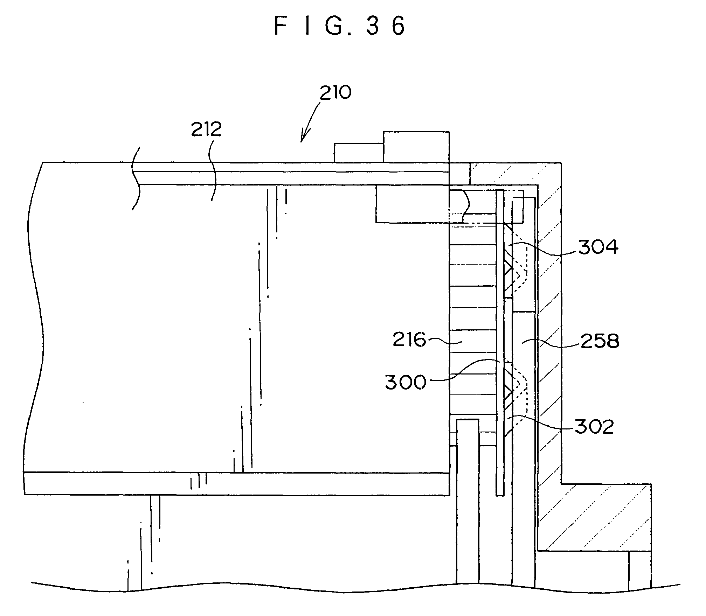

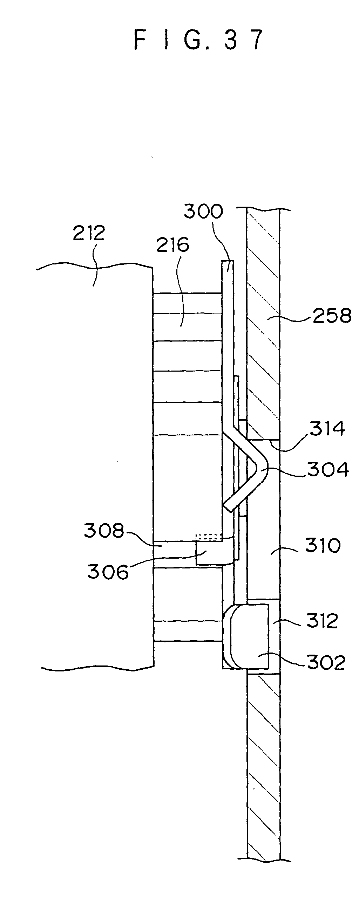

In this concealed condition, the urging member 300 rotates integrally with the driven gear 216 that rotates the display panel 212, and two urging operation elements 302, 304 are fitted into the actuating portion 310 (Fig. 36 and Fig. 37). In this concealed condition, the oblique lines at the tips of the urging operation elements 302, 304 respectively enter together into the actuating portion 310, while one of the urging operation elements 304 is brought into press contact with the operating end 314, and the other urging operation element 302 is brought into press contact with the operating end 312, so that the urging member 300 is immobilized at the prescribed position.

Therefore, the display panel 212 is applied with an urging force to stop the rotation of the axial rod 215, so that the display panel 212 resists moving.

This arrangement prevents the unstable movement of the display panel 212 when the user touches the concealing surface on the reverse face of the display panel 212 due to backlash or rattling, or the unstable vibration of the display panel 212 due to backlash or rattling caused by the vibration applied from the outside with the concealing surface on the reverse face of the display panel 212 exposed, that may give the user a sort of annoyance and a doubt about the reliability of the vehicle mounted electronic device having such an unstable display panel 212.

In addition, since the display panel 212 is immobilized with this concealing surface on the reverse face of the display panel 212 exposed, the fact that the main body of the vehicle mounted electronic device is installed behind the display panel 212 exposing its concealing surface is prevented from being easily discovered because of rattling of the display panel 212.

When the display panel 212 is transformed from service condition to normal operating condition and then to concealed condition, or vice versa, the urging member 300 makes the action to move the next condition while resiliently deforming the urging operation elements 302, 304 by bringing each oblique line of the urging operation elements 302, 304 into sliding contact with each operating end 312, 314.

The operation and action of the vehicle mounted electronic device according to the fourth and fifth embodiment constructed as described above will now be described.

In the vehicle mounted electronic device in service condition (Fig. 17, Fig. 22, and Fig. 23), the display panel 212 exposes the display surface including a liquid crystal display panel or the like, and the control panel 214 exposes various control buttons on the front face of the system body 210.

When this vehicle mounted electronic device is in service condition, the user can make the vehicle mounted electronic device perform desired recording/playing action for the recording disc (CD, MD, etc.) by operating the control button on the control panel 214 while viewing on the display panel 212.

Since the display panel 212 and the control panel 214 is prevented from being easily moved by the braking unit for panels including the resilient pressing member 288 and the abutting face 290, the unstable movement of the display panel 212 or the control panel 214 such as rattling when the user presses the control switch may be prevented, thereby improving the user's feeling of usage.

Subsequently, in order to load or unload the CD, MD or other recording discs to/from the player mounted in the system body 210, the display panel 212 and the control panel 214 are transformed into normal operating condition.

In order to do this, the user controls a prescribed switch on the control panel 214 for transforming the electronic device into normal operating condition. Then, the control unit of the vehicle mounted electronic device actuates the driving motor 224, and then stops it at the moment when the counter counts a prescribed time period.

Then, a driving force of the driving motor 224 is transmitted from the worm 226 on the output shaft through the worm gear 228 of the speed reducing gear mechanism, the first double gear 230, the second double-gear 232, to the third double-gear 234 sequentially, and both of the pair of cam gears 238 being engaged with the pair of output gears 236 of the speed reducing gear mechanism respectively rotate simultaneously in the direction shown by the arrow A.

This action rotates the cam groove 244 for operating the control panel 214 together with the pair of cam gears 238, and then drives the driven pin 270 to rotate the operating follower 256 about the axial pin 264 in the direction shown by the arrow B.

In conjunction with the rotary motion of the operating follower 256 via the operating clamping portion 266 and the driven locking member 222, the supporting strip 218 moves the control panel 214 from the position shown in Fig. 22 and Fig. 23 through the position shown in Fig. 24 to the position shown in Fig. 25 where it is retracted into the system body 210.

During the action to reach the state shown in Fig. 25, since the cam groove 242 rotating together with the pair of cam gears 238 is constructed so that the amount to lift the driven pin 268 is set to zero, and operating follower 254 is kept in halt condition, the display panel 212 is kept immobilized.

When the pair of cam gears 238 are further rotated in the direction shown by the arrow A from the condition shown in Fig. 25, the cam groove 242 rotates together with the pair of cam gears 238, and accordingly, drives the driven pin 268 to rotate the operating follower 254 in the direction shown by the arrow C.

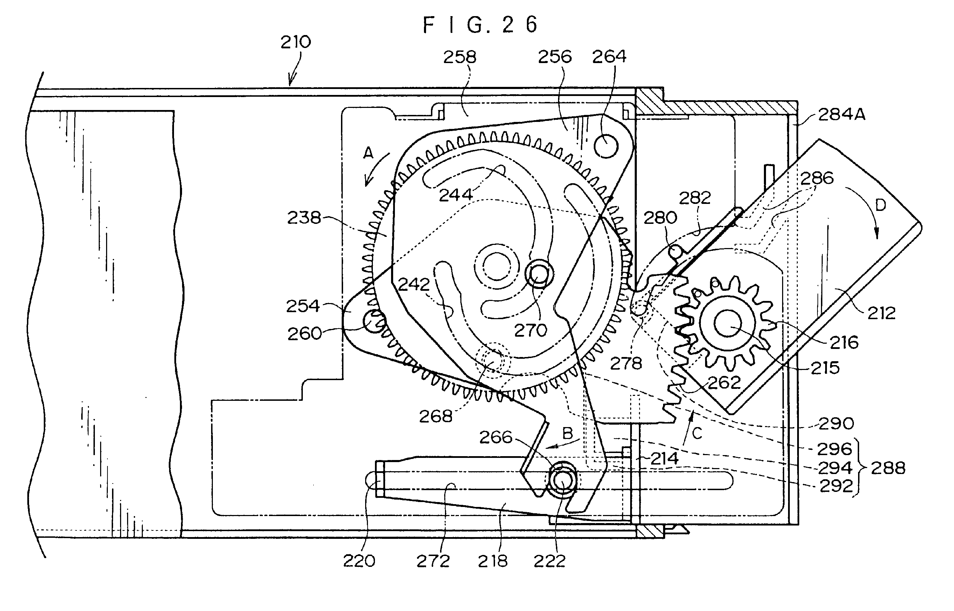

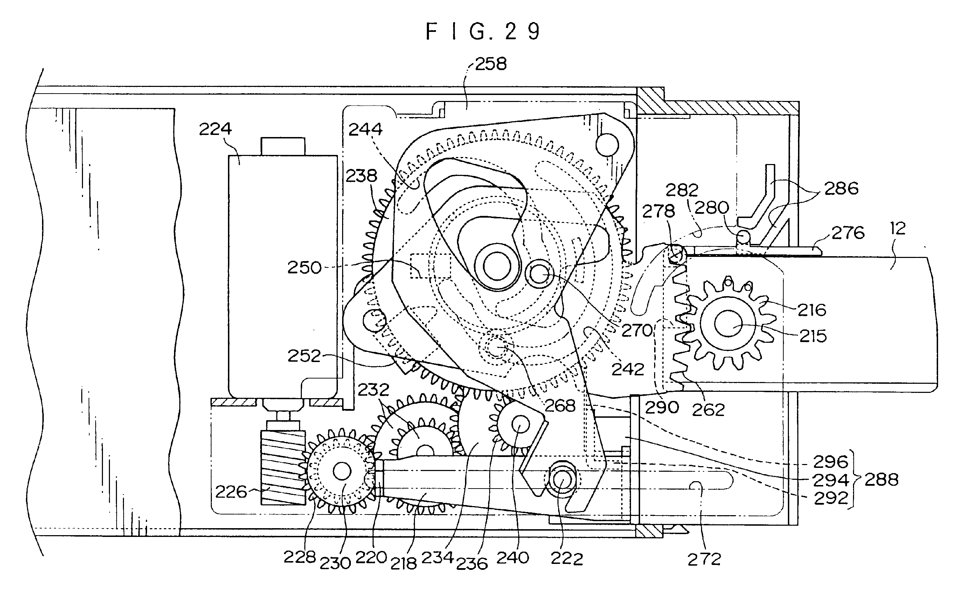

The rotary motion of the operating follower 254 rotates the sector portion 262 in the direction shown by the arrow C, and thus the driven gear 216 engaged with the sector portion 262 in the direction shown by the arrow D, so that the display panel 212 integral with the driven gear 216 is rotated from the condition shown in Fig. 25 through the condition shown in Fig. 26 to normal operating condition shown in Fig. 29 in the direction shown by the arrow D.

During the action to reach from service condition (Fig. 22 and Fig. 23) to normal operating condition (Fig. 18, Fig. 20, Fig. 21, Fig. 27, and Fig. 29), the driven member 280 slides in the guiding groove for a rotary motion 282, and accordingly the concealing panel 276 journaled on the display panel 212 reaches the exit, but the driven member 280 is not transferred to the guiding portion 286. Therefore, the concealing panel 276 is in a state of being abutted against the end surface of the display panel 212 and opening its insertion port 274.

In this normal operating condition, as described above, the urging member 300 rotates integrally with the driven gear 216 that rotates the display panel 212, and then one of the urging operation elements 304 is fitted within the actuating portion 310, and urges the display panel 212 to rotate in the direction shown by the arrow D together with the urging member 300.

Therefore, an urging force in the direction shown by the arrow D acts on the display panel 212, so that the display panel 212 resists moving.

During the action to reach the normal operating condition shown in Fig. 29, since the cam groove 244 for operating the control panel 214 rotating together with the pair of cam gears 238 is constructed so that the amount to lift the driven pin 270 is set to zero, and operating follower 256 is kept in halt condition, the control panel 214 is kept immobilized.

Therefore, the action to load or unload the CD, MD or other recording discs from/to the player mounted in the system body 210 is made through the opened insertion port 274. Since the urging member 300 restrains the display panel 212 at this moment, the user can easily load or unload the recording disc.

When the user of this vehicle mounted electronic device gets off and leaves the vehicle (motor vehicle) provided with this system body 210, he or she transforms the vehicle mounted electronic device into concealed condition in which the existence of this vehicle mounted electronic device is concealed.

The action of transforming into concealed condition is started based on a signal generated for example when the ignition key of the motor vehicle is switched to OFF position.

Therefore, when the vehicle mounted electronic device received a signal representing that the ignition key is turned OFF when it is in normal operating condition (Fig. 18, Fig. 20, Fig. 21, Fig. 27, and Fig. 29), the control unit of the vehicle mounted electronic device activate the driving motor 224, and at the moment when the counter counts the prescribed time period, it stops the driving motor 224.

Then, a driving force of the driving motor 224 is transmitted from the worm 226 on the output shaft through the worm gear 228 of the speed reducing gear mechanism, the first double-gear 230, the second double-gear 232, to the third double-gear 234 sequentially, and both of the pair of cam gears 238 being engaged with the pair of output gears 236 of the speed reducing gear mechanism respectively rotate simultaneously in the direction shown by the arrow A.

When the pair of cam gears 238 are further rotated in the direction shown by the arrow A from normal operating condition (Fig. 18, Fig. 20, Fig. 21, Fig. 27, and Fig. 29), the cam groove 242 rotates together with the pair of cam gears 238, and accordingly, drives the driven pin 268 to rotate the operating follower 254 in the direction shown by the arrow C.

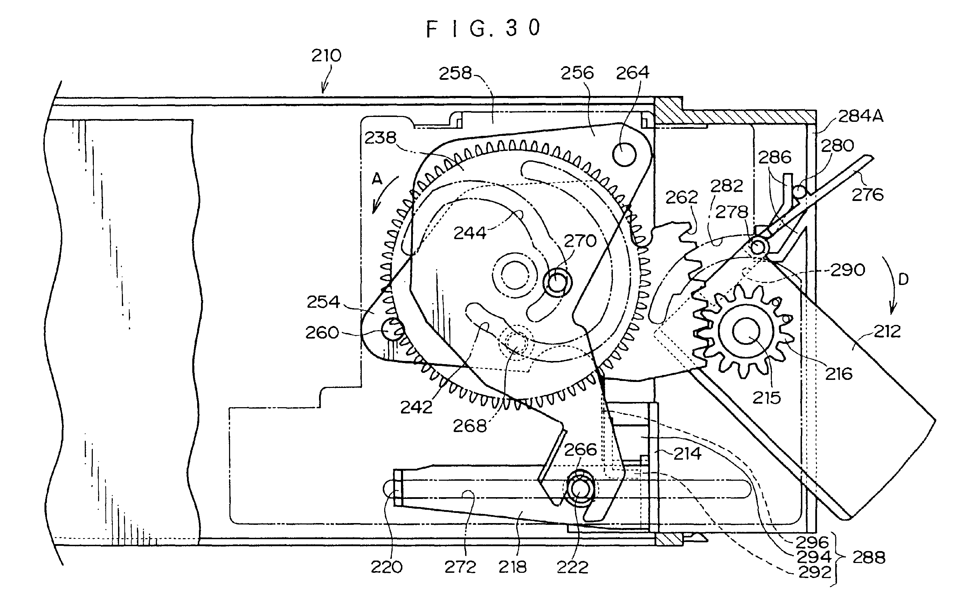

The rotary motion of the operating follower 254 rotates the sector portion 262 in the direction shown by the arrow C, and thus the driven gear 216 engaged with the sector portion 262 in the direction shown by the arrow D, so that the display panel 212 integral with the driven gear 216 is rotated in the direction shown by the arrow D from normal operating condition shown in Fig. 29 through the condition shown in Fig. 30 to concealed condition shown in Fig. 19 and Fig. 31.

During the action to reach from normal operating condition (Fig. 18, Fig. 20, Fig. 21, Fig. 27, and Fig. 29) to concealed condition, the driven member 280 of the concealing panel 276 journaled on the display panel 212 moves out of the exit of the guiding groove for a rotary motion 282, enters into the guiding portion 286, and is guided by the guiding portion 286, and accordingly, the concealing panel 276 is rotated about the axial rod 278, rises up from the end surface of the display panel 212 and transforms to concealed condition where the insertion port 274 is closed as shown in Fig. 19 and Fig. 31.

In this concealed condition, the urging member 300 rotates integrally with the driven gear 16 that rotates the display panel 12, and the two urging operation element 302, 304 are fitted within the actuating portion 310 together, thereby urging the urging member 300 so that it is kept in immobilized state at a prescribed position.

Therefore, the display panel 212 is applied with an urging force to stop the rotation of the axial rod 215, so that the display panel 212 resists moving.

In this arrangement, with the concealing surface on the reverse face of the display panel 212 exposed, the unstable movement or vibration of the display panel 212 occurred when the user touches or due to the vibration can be prevented, and thus the user is prevented from having a sort of annoyance, and the fact that the main body of the vehicle mounted electronic device is installed behind the display panel 212 exposing its concealing surface is prevented from being easily discovered.

During the action to reach concealed condition shown in Fig. 19 and Fig. 31, since the cam groove 244 for operating the control panel 214 that rotates together with the pair of cam gears 238 is constructed so that the amount to lift the driven pin 270 is set to zero, and operating follower 256 is kept in halt condition, the control panel 214 is kept immobilized.

Therefore, the camouflaging decorative surface of the reversed display panel 212 designed to have uniformity with the peripheral portion where the system body 210 is to be installed is exposed at the front surface of the system body 210, and the camouflaging decorative surface of the concealing panel 276 designed to have uniformity with the peripheral portion where the system body 210 is to be installed in the same manner as the reverse face of the display panel 212 is exposed.

Consequently, the system body 210 for vehicle mounted electronic device can camouflage as if there is no electronic device existed in the space for installing the electronic device with the camouflaging decorative surface of the display panel 212 and the concealing panel 276 in concealing condition, the vehicle mounted electronic device can be effectively protected against theft.

The action to return from concealed condition to normal operating condition and then to service condition is made by reversing procedure described above. The electronic device may be constructed in such a manner that the action to return from concealed condition to normal operating condition is started, for example, by a signal generated when the ignition key of the motor vehicle is switched from the OFF position to the ON position.

It is also possible to construct the electronic device in such a manner that it returns from service condition directly to concealed condition, or from concealed condition directly to service condition.

In the fourth and fifth embodiment, since the panel is divided, the distance of radius of rotation of the first panel decreases, and thus the space required for rotation is also reduced. It is quite important to reserve the space for installing the device (to reduce the space required for rotation) on the side of the system body.

In addition, by rotating the divided panels, the radius of rotation of each panel may be reduced, and thus the space within the panel can be used effectively.

In this embodiment, the timing of movement of both panels may be determined as appropriate by the configuration of the cam groove. In this way, by moving the first panel after the second panel is moved, the probability of occurrence of interference between these panels is eliminated. By actuating these panels simultaneously, the time required for terminating the action may be reduced.

The construction of the electronic device according to the embodiments described above may be applied not only to car stereos that is the vehicle mounted electronic device, but also to other various types of electronic devices for example for car navigation system provided with an exterior panel such as a front panel or the like. The panel is not indispensable to have a camouflaging surface on one side, and it may be constructed in such a manner that both faces are formed with control surfaces or with display surfaces, or that one of the faces is formed with a display surface and the other face is formed with a control surface, as a matter of course.

The electronic device according to the fifth embodiment described above is constructed in such a manner that the braking unit for panels including the urging member 300 and the actuating portion 310 prevents the display panel 212 from being easily moved when it is in normal operating condition and in concealed condition.

However, the braking unit for panels in the electronic device according to the present invention is not limited thereto, and it may be constructed in such a manner that the display panel 212 is prevented from being easily moved when it is in service condition and in normal operating condition.

In this case, the actuating portion 310 to be formed on the supporting member 258 is formed at the position symmetrical about the center of the axial rod 215 as shown by the chain triple-dashed line in Fig. 33.

In this arrangement, the axial rod 215 of the display panel 212 is held so as not to be easily moved by the urging member 300 when it is in service condition.

Therefore, the unstable movement of the display panel 212 when the user touches the display on the display panel 212, or when the user presses the control switch on the display panel 212 if any is prevented to improve the user's feeling of usage.

As is described thus far, according to the electronic device of the present invention, since the panel to be mounted on the system body is divided into a plurality of pieces and mounted separately, and each panel is constructed to be driven in a simple manner, the construction of the driving mechanism for operating each panel may be simplified and manufactured at low cost, and in addition, the simple action of each panel can be suitably carried out at a prescribed timing, thereby improving reliability in performance.

According to the electronic device of the present invention, when the panel is set to operating condition where the controlling surface that is normally used is exposed, the panel is held so as not to move with the braking unit for panels. Therefore, a feeling of operation when the user operates the switches on the panel may be improved. In addition, the braking unit for panels may have a simple construction and thus may be manufactured at low cost.

In addition, according to the electronic device of the present invention, the panel is held so as not to move when it is set in a prescribed operating condition. Therefore, the panel set in a prescribed operating condition is immobilized and thus the function of the panel in that condition can be preferably fulfilled. In addition, the construction of means for holding the panel position may be simplified and thus it can be manufactured at low cost.

## Claims

1. An electronic device comprising:
a first panel mounted at the panel mounting position facing outwardly of the system body and being mounted so as to rotate and selectively expose the front face or the reverse face;
a second panel mounted at the panel mounting position facing outwardly of the system body so as to shift between the position in which it is flush the first panel and the position in which it is retracted into the system body; and
a drive unit for carrying out an operation to retract the second panel that is flush with the first panel into the system body and an operation to rotate the first panel exposing the front face at the panel mounting position to the position where the reverse face is exposed at the panel mounting position.

2. An electronic device according to Claim 1, further comprising:
a drive unit for a linear motion for shifting the second panel between the position being flush with the first panel and the position being retracted into the system body; and
a drive unit for a rotary motion for rotating the first panel and reverse it from the front face to the reverse face.

3. An electronic device according to Claim 1, further comprising:
a third panel being flush with the first panel at the panel mounting position facing outwardly of the system body and being mounted so as to rotate and selectively expose the front face or the reverse face; and
a concealing panel journaled on the reverse side of the third panel;
wherein the drive unit performs the operation in such a manner that when the drive unit rotates the first panel so that the reverse face thereof is exposed at the panel mounting position, it also rotates the third panel into a state in which the reverse face is exposed, and the concealing panel closes and conceals the opening generated between the third panel and the first panel in association with the rotation of the third panel.

4. An electronic device according to Claims 1 or 2, further comprising;
a braking unit for the panel in which a resilient pressing member mounted on the second panel presses and abuts against the first panel to prevent the first panel from being easily moved when rotating the first panel and reversing its exposed face from the reverse face to the front face and moving the second panel from the retracted position in the system body to the position flush with the first panel.

5. An electronic device according to Claim 4, wherein said braking unit for panels comprises;
a spring member that is a small leaf spring mounted on the second panel; and
an abutting face formed on the first panel to which the tip portion of the spring member is resiliently abutted.

6. An electronic device according to any one of Claims 1, 2, 4 and 5, further comprising;
a first operating unit for rotating the first panel;
a second operating unit for shifting the second panel; and
a cam mechanism for rotating the first panel via the first operating unit and shifting the second panel via the second operating unit.

7. An electric device according to Claim 6, wherein a concealing panel is mounted in such a manner that it is moved to cover the space generated between the first panel and the panel mounting position when the electronic device is in the concealed state in which the first panel is rotated and covers the front portion of the second panel.

8. An electronic device according to any one of Claims 1 through 7, further comprising;
an urging member to be fixed on the axial rod of the first panel;
an urging operation element that is a spring member bent for forming a resiliently deformable inclined surface on a part of the urging member; and
an actuating portion for preventing the panel combined with the urging member from being easily rotated about the axial rod by bringing the urging operation element into abutment when the first panel is transformed into a prescribed state.

9. An electric device according to Claim 8, wherein the urging member has a pair of urging operation element facing toward each other, which are formed into generally V-shaped cantilever leaf spring respectively, and when the panel is transformed into a prescribed state, one of urging operation elements is brought into press-contact with one of the operating ends of the actuating portion that is an opening formed on the member fixed on the system body and urges the panel combined with the urging member to rotate about the axial rod in the prescribed direction so that the panel resists moving easily, or a pair of urging operation elements are brought into press-contact with each operating end of the actuating portion that is an opening formed on the member fixed on the system body simultaneously so that the axial rod is restrained from easily rotating.
